(19) Europäisches Patentamt / European Patent Office / Office européen des brevets

(11) **EP 3 844 199 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **19758368.5**

(22) Anmeldetag: **19.08.2019**

(51) Internationale Patentklassifikation (IPC):
*C08F 290/06* (2006.01)    *C08G 18/00* (2006.01)
*C08G 18/16* (2006.01)    *C08G 18/24* (2006.01)
*C08G 18/32* (2006.01)    *C08G 18/58* (2006.01)
*C08G 18/81* (2006.01)    *C08G 18/62* (2006.01)
*C08G 18/60* (2006.01)    *C08G 18/50* (2006.01)
*C08G 18/67* (2006.01)    *C08G 18/75* (2006.01)
*C08G 59/40* (2006.01)    *C09D 151/08* (2006.01)
*C09J 151/08* (2006.01)

(52) Gemeinsame Patentklassifikation (CPC):
(C-Sets verfügbar)
C09D 151/08; C08F 290/064; C08G 18/003;
C08G 18/168; C08G 18/248; C08G 18/324;
C08G 18/325; C08G 18/5024; C08G 18/58;
C08G 18/588; C08G 18/603; C08G 18/6229;
C08G 18/6254; C08G 18/671; C08G 18/755;
(Forts.)

(86) Internationale Anmeldenummer:
**PCT/EP2019/072091**

(87) Internationale Veröffentlichungsnummer:
**WO 2020/043521 (05.03.2020 Gazette 2020/10)**

(54) **HÄRTBARE ZWEIKOMPONENTENMASSE**

CURABLE TWO-COMPONENT MASS

MATIÈRE DURCISSABLE À DEUX COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2018   DE 102018121067**

(43) Veröffentlichungstag der Anmeldung:
**07.07.2021   Patentblatt 2021/27**

(73) Patentinhaber: **DELO Industrie Klebstoffe GmbH & Co. KGaA**
**86949 Windach (DE)**

(72) Erfinder:
• **RAUCHEISEN, Kilian**
  **86949 Windach (DE)**
• **STARK, Felix**
  **86949 Windach (DE)**
• **ANSELMENT, Timo**
  **86949 Windach (DE)**

(74) Vertreter: **Prinz & Partner mbB**
**Patent- und Rechtsanwälte**
**Rundfunkplatz 2**
**80335 München (DE)**

(56) Entgegenhaltungen:
EP-A2- 0 245 559    WO-A1-2017/044381
DE-A1- 102016 117 183    US-A- 5 013 631
US-A1- 2010 196 618    US-A1- 2017 233 615

• SENGER J S ET AL: "ISOCYANATE-EPOXY REACTIONS IN BULK AND SOLUTION", JOURNAL OF APPLIED POLYMER SCIENCE, JOHN WILEY & SONS, INC, US, vol. 38, no. 2, 20 July 1989 (1989-07-20), pages 373 - 382, XP000116285, ISSN: 0021-8995, DOI: 10.1002/APP.1989.070380218

(52) Gemeinsame Patentklassifikation (CPC): (Forts.)
**C08G 18/8116; C08G 59/4071; C09J 151/08**

C-Sets
**C08F 290/064, C08F 222/103**

**Beschreibung**

GEBIET DER ERFINDUNG

Die vorliegende Erfindung betrifft eine Zwei- oder Mehrkomponentenmasse, die durch Bestrahlen fixiert und bei Raumtemperatur oder wahlweise durch Erwärmen gehärtet werden kann. Die Masse umfasst mindestens einen mindestens difunktionellen Härter auf Stickstoffbasis für Epoxidverbindungen, eine Hybridverbindung, die sowohl strahlungshärtbare Gruppen als auch durch Polyaddition vernetzbare Epoxidgruppen aufweist, und einen Photoinitiator.

Darüber hinaus betrifft die Erfindung ein Verfahren zum Fügen, Beschichten, Abformen oder Vergießen von Substraten unter Verwendung der Zwei- oder Mehrkomponentenmasse.

TECHNISCHER HINTERGRUND

Zweikomponentenmassen bieten durch die Trennung der Reaktivkomponenten den Vorteil, dass Systeme bereitgestellt werden können, die bei Raumtemperatur über lange Zeiträume lagerstabil sind. Die Aushärtungsreaktion beginnt erst nach dem Zusammenführen und Mischen der Komponenten. Vor allem bei großvolumigen industriellen Anwendungen erweist sich dies als vorteilhaft.

Im Falle von Polyadditionssystemen auf Basis von Epoxidharzen und Aminen können bei Raumtemperatur bis zur vollständigen Aushärtung der Masse jedoch mehrere Tage vergehen. Die Aushärtung lässt sich durch den Eintrag von Wärme beschleunigen.

Im Stand der Technik existieren unterschiedliche Ansätze, um den Festigkeitsaufbau der Massen zu beschleunigen. Durch den Einsatz von Beschleunigern auf der Basis von Alkoholen, Metallsalzen und/oder tertiären Aminen lassen sich die Zeiten bis zur vollständigen Aushärtung der Masse zu Lasten der Verarbeitungszeit verbessern. Umgekehrt benötigen Epoxidmassen, die eine lange Verarbeitungszeit besitzen, häufig auch längere Zeiträume bis zum Erreichen der Endfestigkeit der Massen oder müssen zwingend warm gehärtet werden.

Daneben wird für Zweikomponentenmassen vorgeschlagen, über einen Bestrahlungsschritt und eine radikalische Polymerisation schnell eine Anfangsfestigkeit zu erreichen, die zur Fixierung von Bauteilen zueinander ausreichend ist.

Die EP 0 245 559 B1 offenbart Zweikomponentenmassen auf Basis von Epoxiden und Aminen als Härter, die in der Epoxidharzkomponente zusätzlich eine weitere strahlungshärtbare Verbindung und einen Photoinitiator enthalten. Als Härter werden solche Amine ausgewählt, die gegenüber der Addition an die Doppelbindung der (Meth)Acrylate weniger reaktiv sind. Insbesondere primäre Amine werden nach dem Mischen der Komponenten durch Addition an die Acrylatgruppen der strahlungshärtbaren Verbindung unkontrolliert verbraucht und stehen nicht mehr vollständig für die Härtung der Epoxidgruppen zur Verfügung. Gleichzeitig wird der Anteil an strahlungshärtbaren Gruppen reduziert. Durch diese Nebenreaktion wird die durch Lichtfixierung maximal erreichbare Anfangsfestigkeit abhängig vom Zeitpunkt der Bestrahlung nach dem Mischen der Komponenten. Dies erlaubt in der Anwendung ausschließlich ein sehr enges Prozessfenster. Ein weiterer Nachteil ist der Mangel an Formulierungsfreiheit bei der Auswahl der Härter. Selbst durch die Auswahl von weniger reaktiven Aminen lassen sich unerwünschte Additionsreaktionen nicht vollständig unterdrücken. Dies führt in der gehärteten Masse zu unterschiedlichen Eigenschaften zwischen bestrahlten und unbestrahlten Bereichen.

Die US 5,057,348 A beschreibt Vergussmassen auf Basis zweikomponentiger Systeme. Diese enthalten neben verschiedenen Aminhärtern zusätzlich noch höherfunktionelle Acrylate. Die Umsetzung der Härter mit den Acrylatbestandteilen verläuft in diesen Massen ähnlich unkontrolliert wie im Falle der EP 0 245 559 B1 und führt ebenso zu inhomogenen und schwer reproduzierbaren Eigenschaften in der gehärteten Masse, da die ausgebildeten Netzwerke maßgeblich von der zeitlichen Abfolge der Prozessschritte abhängen. Nachteilig ist dies insbesondere für Vergüsse, bei denen ein zuverlässiger Spannungsausgleich gefordert ist.

Die WO 2018/011116 A1 offenbart ein Verfahren zum Erzeugen eines Eigenschaftsgradienten in einer gehärteten Masse. Zum Einsatz kommen lichtfixierbare Epoxid-Amin-Massen, die zusätzliche eine strahlungshärtbare Acrylatverbindung und einen Photoinitiator enthalten. Die unterschiedlichen Reaktionsgeschwindigkeiten der Amine gegenüber den Acrylaten und Epoxidharzen werden in Verbindung mit einer Bestrahlung gezielt eingesetzt, um variable mechanische Eigenschaften zu erzeugen. Zur Durchführung des Verfahrens ist bei der Bestrahlung eine gezielte Abschattung ausgewählter Bereiche nötig, um unterschiedliche E-Moduln in der Fügeverbindung zu erreichen. Dies ist in Anbetracht einer zunehmenden Miniaturisierung vieler Bauteile in der Praxis oftmals nicht mit vertretbarem Aufwand zu realisieren. Ferner lassen sich die beschriebenen Massen nicht zweikomponentig in lagerstabiler Form formulieren.

Die US 5 013 631 A offenbart eine UV-härtbare Zweikomponenten-Schutzbeschichtung, die eine geringe Feuchtigkeitsdurchlässigkeit und gute elektrische Eigenschaften aufweisen und eine Abschattung von Bauteilen auf einer Leiterplatte verhindern soll. Die Beschichtung ist ein Gemisch aus Komponente (A), die ein Gemisch aus einem ersten Teil von etwa 40 bis 80 Gew.-% eines Urethans mit einer freien Isocyanatgruppe; aus einem zweiten Teil von etwa 20 bis 60 Gew.-% reaktiven Acrylatverdünnern; aus einem dritten Teil von 0 bis etwa 10 Gew.-% UV-Photoinitiatoren und aus einem vierten Teil von 0 bis etwa 10 Gew.-% an Additiven darstellt; und Komponente (B), die eine Mischung aus einem ersten Teil von etwa 50 bis 80 Gew.-% eines Acrylat-Epoxidharzes; aus einem zweiten Teil von etwa 1 bis 10 Gew.-% eines Acrylat-Urethan Oligomers, aus einem dritten Teil von etwa 10 bis 94 Gew.-% reaktiver Acrylatmonomere, aus einem vierten Teil von 0 bis etwa 10 Gew.-% UV-Photoinitiatoren und aus einem fünften Teil von 0 bis etwa 10 Gew.-% Additiven darstellt, mit der Maßgabe, dass der Gesamtgewichtsprozentsatz der Photoinitiatoren und Additive nicht weniger als 1 % und nicht mehr als etwa 10 % beträgt. Die Komponenten A und B können zu gleichen Gewichtsanteilen oder in einem Verhältnis von 1 zu 2 Gewichtsanteilen gemischt werden.

Die US 2010/196618 A1 beschreibt ein Verfahren zur Herstellung einer gehärteten Beschichtung oder eines geformten Gegenstands, hergestellt aus einer Zusammensetzung, die ein durch aktinische Strahlung härtendes Polymer umfasst, wobei die Zusammensetzung mit aktinischer Strahlung bei einer Temperatur von höchstens 150 °C gehärtet wird, um die gehärtete Beschichtung oder den gehärteten geformten Gegenstand zu bilden, wobei die gehärtete Beschichtung oder der geformte Gegenstand eine Dicke von mindestens etwa 0,5 mm und eine Härte von etwa Shore A 90 bis etwa Shore D 90 aufweist.

Die DE 10 2016 117183 A1 zeigt warmhärtende und lichtfixierbare, bei Raumtemperatur flüssige Massen auf Epoxidbasis, die mindestens eine epoxidhaltige Verbindung (A) mit mindestens zwei Epoxidgruppen, mindestens einen Härter (B) für die epoxidhaltige Verbindung, wahlweise einen Beschleuniger (C), mindestens eine strahlungshärtende Verbindung (D), mindestens einen Photoinitiator (E) für die radikalische Polymerisation und mindestens einen Füllstoff (F) umfassen. Die strahlungshärtende Verbindung (D) umfasst mindestens ein mindestens trifunktionelles (Meth)Acrylat. Die Epoxidmasse kann insbesondere zum Fixieren und/oder selektiven Verkapseln von elektrischen, elektronischen und/oder elektromechanischen Bauteilen verwendet werden, und/oder zum Verkleben, Beschichten und Abdichten. Die im Stand der Technik beschriebenen lichtfixierbaren Zweikomponentenmassen weisen daher eine eingeschränkte Formulierungsfreiheit und/oder schwer kontrollierbare Unterschiede in den mechanischen Eigenschaften zwischen bestrahlten und unbestrahlten Zonen auf.

Aus der US 2017 233 615 A1 ist ein Tintenstrahlklebstoff bekannt. Der Tintenstrahlklebstoff umfasst eine strahlungshärtbare Verbindung, einen photoradikalischen Initiator, eine wärmehärtende Verbindung mit einer oder mehreren zyklischen Ethergruppen oder zyklischen Thioethergruppen, und eine Verbindung, die in der Lage ist, mit der wärmehärtenden Verbindung zu reagieren.

Ferner offenbart die WO 2017 / 044 381A1 ein Zwei-Kompenten-Epoxidharz, das Folgendes enthält: (i) einen Photoinitiator; (ii) Monomere und/oder Polymere, die durch Bestrahlung mit aktinischer Strahlung oder Licht polymerisierbar sind; (iii) gegebenenfalls ein lichtabsorbierendes Pigment oder einen lichtabsorbierenden Farbstoff; (iv) ein Epoxidharz; (v) gegebenenfalls, aber in einigen Ausführungsformen vorzugsweise, einen mit dem Epoxidharz copolymerisierbaren organischen Härter; (vi) gegebenenfalls, aber vorzugsweise eine zweifach reaktive Verbindung, die eine erste reaktive Gruppe, die mit den Monomeren und/oder Präpolymeren, die durch Einwirkung von aktinischer Strahlung oder Licht polymerisierbar sind, reaktiv ist, und eine zweite reaktive Gruppe, die mit dem Epoxidharz reaktiv ist. Zusammenfassung der Erfindung

Der Erfindung liegt die Aufgabe zugrunde, die oben beschriebenen Nachteile der aus dem Stand der Technik bekannten Zusammensetzungen zu vermeiden.

Insbesondere sollen die Massen in Bezug auf die Härter eine hohe Formulierungsbreite aufweisen. Gleichzeitig sollen die Massen eine ausreichende Formstabilität im lichtfixierten Zustand aufweisen, um so ein breites Spektrum an Anwendungen zu bedienen, bei denen eine anfängliche Fixierung von Bauteilen durch Bestrahlung mit aktinischer Strahlung vorteilhaft ist, bevor die Bauteile in weiteren Prozessen verarbeitet werden.

Gleichzeitig sollen sich die erfindungsgemäßen Massen ohne Einschränkung innerhalb einer für die jeweilige Anwendung sinnvollen Zeitspanne verarbeiten lassen. Dabei sollen sich die mechanischen Eigenschaften der gehärteten Masse zwischen bestrahlten und unbestrahlten Zonen möglichst wenig unterscheiden und unabhängig vom Zeitpunkt der Bestrahlung sein.

Diese Aufgaben werden erfindungsgemäß durch eine härtbare, zwei- oder mehrkomponentige Masse nach Anspruch 1 gelöst.

Vorteilhafte Ausführungsformen der erfindungsgemäßen Masse sind in den Unteransprüchen angegeben, die wahlweise miteinander kombiniert werden können.

Die erfindungsgemäße Masse umfasst die folgenden Komponenten: (a) wahlweise eine mindestens difunktionelle epoxidhaltige Verbindung; (b) einen mindestens difunktionellen Härter auf Stickstoffbasis, der für die Epoxidhärtung geeignet ist, wobei der Härter bei Raumtemperatur, 23 ± 2 °C, in flüssiger Form vorliegt; (c) 10 bis 80 Gewichtsprozent einer strahlungshärtbaren Verbindung, die wenigstens eine Hybridverbindung umfasst, bezogen auf das Gesamtgewicht der Komponenten a) bis d), wobei die Hybridverbindung sowohl eine oder mehrere strahlungshärtbare Methacrylatgruppen als auch eine oder mehrere Epoxidgruppen aufweist, wobei die Hybridverbindung (c1) jeweils in Bezug auf die Epoxidgruppen und/oder die strahlungshärtbaren Methacrylatgruppen di- oder höherfunktionell ist, und wobei der Stoffmengenanteil der strahlungshärtbaren Methacrylatgruppen der Hybridverbindung 50 bis 100 % beträgt, bezogen auf das strahlungshärtbare Äquivalentgewicht (SEW) der Masse, wobei das strahlungshärtbare Äquivalentgewicht (SEW) der Masse wie in der Beschreibung angegeben definiert ist; (d) einen radikalischen Photoinitiator; (e) wahlweise einen Beschleuniger für die Epoxidhärtung und (f) wahlweise weitere Additive.

Die Komponenten der erfindungsgemäßen Zwei- oder Mehrkomponentenmasse sind vorzugsweise bei Raumtemperatur flüssig und können nach dem Vermischen miteinander durch Bestrahlung mit aktinischer Strahlung fixiert werden. Nach dem Mischen härtet die Masse bei Raumtemperatur innerhalb weniger Tage oder Stunden aus. Die Aushärtung kann wahlweise durch Wärme beschleunigt werden.

Gegenstand der Erfindung ist weiter die Verwendung der erfindungsgemäßen Masse als Klebstoff oder Dichtstoff für das Verkleben, Vergießen, Abdichten oder Beschichten von Substraten. Insbesondere eignen sich die Massen für die Herstellung optoelektronischer Aufbauten sowie für die Fertigung von Elektromotoren.

Die Erfindung betrifft ferner ein Verfahren zum Fügen, Beschichten, Abformen oder Vergießen von Substraten unter Verwendung der erfindungsgemäßen Masse. Durch Bestrahlung lässt sich die auf ein Substrat applizierte Masse in einen formstabilen Zustand überführen und der Verbund in nachfolgenden Prozessschritten weiter verarbeiten. Wahlweise kann die bestrahlte Masse zum Beispiel in einem Ofenprozess abschließend warm gehärtet werden.

Die erfindungsgemäße Zweikomponentenmasse weist sowohl in den bestrahlten als auch unbestrahlten Bereichen nach der vollständigen Aushärtung keine wesentlichen Unterschiede in Bezug auf die mechanischen Eigenschaften, insbesondere in Bezug auf den E-Modul, die Glasübergangstemperatur und/oder die Reißdehnung, auf.

Die Verarbeitungszeit und die mechanischen Eigenschaften der Masse lassen sich durch Auswahl aus einem breiten Spektrum an Epoxidverbindungen und Härtern sowie wahlweise durch Zusatz von Beschleunigern und/oder Additiven einstellen.

AUSFÜHRLICHE BESCHREIBUNG BEVORZUGTER AUSFÜHRUNGSFORMEN

Die Erfindung wird im Folgenden anhand von bevorzugten Ausführungsformen ausführlich und beispielhaft beschrieben.

"Zwei- oder mehrkomponentig" oder "Zwei- oder Mehrkomponentenmasse" bedeutet im Sinne der Erfindung, dass die reaktiven Komponenten der Masse physisch getrennt voneinander vorliegen. Bevorzugt werden die erfindungsgemäßen Massen als Zweikomponentenmassen formuliert. Die getrennt vorliegenden Komponenten werden im Folgenden auch als Harzkomponente (A) und Härterkomponente (B) bezeichnet. Die Harzkomponente (A) und die Härterkomponente (B) können jeweils aus mehreren (Einzel-)Komponenten zusammengesetzt sein, die miteinander kompatibel sind. Soweit im Folgenden auf Zweikomponentenmassen Bezug genommen wird, sind davon auch Mehrkomponentenmassen umfasst.

Für die einfache Verwendung der Massen ist der Einsatz in Doppelkammerkartuschen (z.B. Reihe Mixpac der Fa. Sulzer) von Vorteil. Bevorzugte Volumenmischungsverhältnisse der Komponenten (A)/(B) liegen in einem Bereich von 2:1 bis 1:1. Zur Durchmischung und Dosierung können statische Mischrohre verwendet werden.

"Flüssig" bedeutet im Sinne der Erfindung, dass bei 23 °C der durch Viskositätsmessung bestimmte Verlustmodul G" größer als der Speichermodul G' der betreffenden Komponente ist.

Soweit der unbestimmte Artikel "ein" oder "eine" verwendet wird, ist damit auch die Pluralform "ein oder mehrere" umfasst, soweit diese nicht ausdrücklich ausgeschlossen wird.

"Mindestens difunktionell" bedeutet, dass pro Molekül zwei oder mehr Einheiten der jeweils genannten funktionellen Gruppe enthalten sind. Es wird dabei nicht nach primären, sekundären oder tertiären funktionellen Gruppen unterschieden.

Alle im Folgenden aufgeführten Gewichtsanteile beziehen sich jeweils auf das Gesamtgewicht der reaktiven Komponenten (a) bis (e), wenn nicht anders angegeben. Für das Gesamtgewicht explizit nicht zu berücksichtigen sind die Anteile an Additiven (f), wie beispielsweise Füllstoffe, Weichmacher und/oder nicht reaktive Toughener.

Als aktives Amin-H Äquivalentgewicht (active hydrogen equivalent weight; AHEW) wird im Folgenden die Masse (m) bezeichnet, welche ein Mol aktive H-Funktionalitäten enthält, die direkt an ein Stickstoffatom gebunden sind. Primäre Amine besitzen eine aktive H-Funktionalität von 2, sekundäre Amine eine aktive H-Funktionalität von 1.

$$AHEW\ [g/mol] = m\ [g]\ /\ n_{akt\text{-}H}\ [mol].$$

Als Epoxid-Äquivalentgewicht (epoxy equivalent weight; EEW) wird im Folgenden die Masse (m) bezeichnet, welche ein Mol Epoxidfunktionalitäten enthält.

$$EEW\ [g/mol] = m\ [g]\ /\ n_{epoxy}\ [mol].$$

Als strahlungshärtbares Äquivalentgewicht (SEW) wird im Folgenden die Masse (m) bezeichnet, welche ein Mol strahlungshärtende Funktionalität besitzt.

$$SEW\ [g/mol] = m\ [g]\ /\ n_{strahlungshärtende\ Gruppen}\ [mol].$$

Den im Folgenden verwendeten Stoffbezeichnungen wurden jeweils in Klammern kommerzielle Handelsbezeichnungen und/oder der jeweilige Lieferant oder Hersteller beigefügt.

Komponente (a): Epoxidverbindung

Die Epoxidverbindung (a) ist in ihrer chemischen Struktur nicht weiter eingeschränkt und umfasst bevorzugt aromatische oder aliphatische Verbindungen mit mindestens zwei Epoxidgruppen im Molekül, wie beispielsweise Glycidylester, Glycidylether, Glycidylamine und Mischungen davon. Ferner können auch monofunktionelle Epoxidverbindungen als Reaktivverdünner in Komponente (a) enthalten sein.

Bevorzugt werden in den erfindungsgemäßen Massen aromatische Glycidylether verwendet. Diese sind aus der Umsetzung von Epichlorhydrin mit aromatischen Alkoholen und Phenolen erhältlich. Beispiele für solche aromatische Epoxidverbindungen und deren jeweilige Handelsbezeichnungen sind Bisphenol-A-Epoxidharze (D.E.R. 331, Epikote Resin 828), Bisphenol-F-Epoxidharze (Epikote Resin 862, Epikote Resin 863, YDF-170), Mischungen aus Bisphenol A und F Diglycidylethern (D.E.R. 351, Epikote Resin 166, YDF-161), Phenol-Novolak-Epoxidharze (D.E.N. 424, D.E.N. 437, D.E.N. 440, YDPN-631) und Cresol-Novolak-Epoxidharze (DIC Corporation Epiclon N-670, YDCN-500-5P).

Ferner können Glycidylether auf Basis von aromatischen Alkoholen wie 1,6-Naphthalindiol (Araldite MY 0816), Tris(hydroxyphenyl)methan (Tactix 742), unterschiedlichen Bisphenolen, hydroxysubstituierten Biphenylen (z.B. jER YX4000H) oder monofunktionelle Glycidylether z.B. auf Basis von p-tert-Butylphenol (D.E.R. 727), Cardanol (Cardolite NC-513) oder Nonylphenol (Erisys GE-12) eingesetzt werden.

Zusätzlich können Diglycidylether auf Basis von aliphatischen Alkoholen verwendet werden, wie Butandiol (Araldite DY-D), Hexandiol (Araldite DY-H), Cyclohexandimethanol (Araldite DY-C), polymeren Diolen (z.B. Polyoxypropylenglycol, Araldite DY-F), Dicylopentadiendimethanol (Adeka EP 4088S) oder Aminen und Aminophenolen wie z.B. TGAP (Triglycidylether des Aminophenols; Araldite MY 0610) oder TGMDA (Tetraglycidylether des Methylendianilins, Araldite MY 721).

Ferner können auch alle vollständig oder teilweise hydrierten Analoga aromatischer Epoxidverbindungen eingesetzt werden. Bevorzugt sind hydrierte Bisphenol-A- und Bisphenol-F-Epoxidharze (z.B. Eponex Resin 1510).

Auch mit epoxidhaltigen Gruppen substituierte Isocyanurate und andere heterocyclische Verbindungen können in den erfindungsgemäßen Massen als Komponente (a) eingesetzt werden. Beispielhaft sind Triglycidylisocyanurat und Monoallyldiglycidylisocyanurat genannt.

Außerdem können auch mono- und polyfunktionelle Epoxidharze aller genannten Harzgruppen eingesetzt werden, welche neben den EpoxidFunktionalitäten weitere funktionelle Gruppen enthalten. Beispiele hierfür sind OH-funktionelle, oligomere aromatische Epoxidverbindungen (z.B. Dow D.E.R. 671 oder Kukdo KD-9004).

Es können ebenfalls Additionsprodukte der genannten Epoxidverbindungen mit H-aciden Verbindungen (in niedermolekularer oder in polymerer Form) wie Carbonsäuren, Alkoholen und/oder Thiolen eingesetzt werden. Besonders bevorzugte Beispiele hierfür sind reaktive Flüssigkautschuke, z.B. Additionsprodukte von Epoxidverbindungen mit CTBN Kautschuk (z.B. Albipox 2000) bzw. Dimerfettsäuren (z.B. B-Tough A3).

Ebenfalls im Sinne der Erfindung ist eine Kombination mehrerer epoxidhaltiger Verbindungen, von denen mindestens eine di- oder höherfunktionell ist.

Die Komponente (a) liegt in der erfindungsgemäßen Masse, bezogen auf das Gesamtgewicht der Komponenten (a) bis (e), bevorzugt in einem Anteil von 0 bis 80 Gew.-% vor. Besonders bevorzugt beträgt der Anteil der Komponente (a) von 10 bis 65 Gewichtsprozent.

Monofunktionelle Epoxidverbindungen können in der Komponente (a) in einem Anteil von bis zu 20%, besonders bevorzugt bis zu 10%, bezogen auf den Gewichtsanteil der Komponente (a), enthalten sein.

Komponente (b): Mindestens difunktioneller Härter

Der mindestens difunktionelle Härter (b) auf Stickstoffbasis für die Epoxidhärtung ist bevorzugt aus der Gruppe der primären und sekundären Amine ausgewählt und umfasst Verbindungen mit mindestens zwei zur Epoxidhärtung geeigneten Aminogruppen pro Molekül.

Die Komponente (b) ist in ihrer chemischen Struktur nicht weiter eingeschränkt und umfasst vorzugsweise aromatische, aliphatische, cycloaliphatische Amine, Polyamine, (Poly)-etheramine, Amin-modifizierte Kautschuke, N-haltige Heterocyclen und Amin-Addukte wie Polyamide, Polyamidoamine und Mannich-Basen, sowie Kombinationen davon.

Bevorzugt ist das mindestens difunktionelle Amin aus der Gruppe ausgewählt, die aus aliphatischen oder cycloaliphatischen Aminen, Polyetheraminen, Polyamiden, Mannich Basen oder deren Reaktionsprodukten mit Epoxidharzen sowie Kombinationen davon besteht.

Beispiele für kommerziell erhältliche aliphatische Amine und Polyamine sind Ethylendiamin (EDA), Diethylentriamin (DETA), Triethylentetraamin (TETA), Aminoethylpiperazin (N-AEP), N,N'-Bis(3-aminopropyl)piperazin (BAPP), sowie Dimerfettsäurediamine (Priamin 1071). Kommerziell erhältlich sind diese von der Fa. DowDuPont oder von der Fa. Hexion z.B. unter dem Handelsnamen EPIKURE Curing Agent 3200, 3223, 3234, 3245. Kommerziell erhältliche Beispiele für cycloaliphatische Amine sind z.B. Isophorondiamin (Evonik, Versamid IPD), Octahydro-4,7-methanoindene-1(2),5(6)-dimethanamine (Oxea, TCD-Diamin), Piperazin (DowDuPont) oder das Jeffamin RFD-270 von Huntsman, welches sowohl cycloaliphatische als auch Polyether Bausteine enthält.

(Poly)-etheramine können z.B. von der Fa. Huntsman (Beispiele: Jeffamine T-404, T-3000, THF-100, DER-148, ED-600, D-230, D2000) der Fa. Hexion (EPIKURE Curing Agent 3230, 3233) oder der Fa. BASF (Baxxodur EC 130, EC 302, EC 311) bezogen werden.

Amin-Addukte sind Reaktionsprodukte aus Aminen und weiteren Bestandteilen und umfassen z.B. Polyamide (Versamid 140), Polyamidoamide (Aradur 955) oder Mannich-Basen (Epikure Curing Agent 105 oder 110, Cardolite NC-557). Reaktive Flüssigkautschuke oder andere aminofunktionalisierte Polymere sind bevorzugte Bestandteile von Komponente (b). Beispiele hierfür sind funktionalisierte Butadien-Nitril Kautschuke (Hypro ATBN 1300x16).

Besonders bevorzugt ist in der erfindungsgemäßen Masse eine Verwendung von aliphatischen Aminen, (Poly)etheraminen, Mannich-Basen, Polyamiden oder Mischungen aus diesen. Bevorzugt können auch Umsetzungsprodukte aus den genannten Aminoverbindungen und Epoxidverbindungen eingesetzt werden.

Der Härter (b) liegt in flüssiger Form vor.

Die voranstehenden Aufzählungen sind als beispielhaft und nicht abschließend zu sehen. Mischungen der genannten Härter (b) sind ebenfalls im Sinne der Erfindung.

Der Anteil des mindestens difunktionellen Härters (b) beträgt in der erfindungsgemäßen Masse 5 bis 90 Gew.-%.

Die Einstellung des Verhältnisses der reaktiven Komponenten erfolgt in den erfindungsgemäßen Massen über das Äquivalent-Verhältnis EEW zu AHEW. Über dieses können die Eigenschaften der ausgehärteten Masse gesteuert werden. Beispielsweise führt ein Amin-Überschuss zu flexibleren Materialien. Ein Überschuss an Epoxidgruppen kann bei nachfolgender Wärmebehandlung die Festigkeit der gehärteten Masse erhöhen.

Bevorzugt wird ein EEW/AHEW-Verhältnis von 0,8 bis 1,2 verwendet, und besonders bevorzugt liegt das Verhältnis in einem Bereich von 0,95 bis 1,05.

Komponente (c): Strahlungshärtbare Verbindung

Komponente (c) umfasst Verbindungen, die durch aktinische Strahlung härtbar sind. Erfindungsgemäß umfasst die Komponente (c) eine strahlungshärtbare Hybridverbindung (c1). Diese verfügt sowohl über eine oder mehrere Methacrylatgruppen, als auch über eine oder mehrere Epoxidgruppen.

Erfindungsgemäß ist die Hybridverbindung (c1) in Bezug auf die Epoxidgruppen und/oder die strahlungshärtbaren Methacrylatgruppen di- oder höherfunktionell ist,

In Bezug auf die strahlungshärtbaren Methacrylatgruppen ist die Hybridverbindung (c1) bevorzugt di- oder höherfunktionell. Ferner ist die Hybridverbindung (c1) in Bezug auf die über Polyaddition vernetzbaren Epoxidgruppen bevorzugt mindestens difunktionell. Es können aber auch Hybridverbindungen (c1) verwendet werden, die in Bezug auf die Methacrylatgruppen monofunktionell und in Bezug auf die Epoxidgruppen di- oder höherfunktionell sind, und umgekehrt.

Eine strahlungshärtbare Hybridverbindung (c1), welche sowohl eine oder mehrere Methacrylatgruppen, als auch eine oder mehrere Epoxidgruppen trägt, ist in einer ersten Ausführungsform aus der Umsetzung eines Isocyanatomethacrylates (c2) mit einer hydroxyfunktionellen, epoxidhaltigen Verbindung (c3) erhältlich. Wahlweise können zur Beschleunigung dieser Reaktion Katalysatoren eingesetzt werden.

Geeignete Isocyanatomethacrylate (c2) sind beispielsweise Umsetzungsprodukte, wie sie nach einem Verfahren aus der DE 3 025 227 A1 durch Reaktion aliphatischer, cycloaliphatischer und/oder aromatischer, mindestens difunktioneller Isocyanate (c4) mit hydroxyfunktionellen Methacrylaten (c5) erhalten werden können. Vorzugsweise wird das Diisocyanat in einem Überschuss von 20 Gew.-% oder mehr eingesetzt. Überschüssige, nicht umgesetzte monomere Diisocyanate (c4) können wahlweise durch Destillation aus dem Reaktionsgemisch abgetrennt werden, beispielsweise durch Destillation im Vakuum mit Hilfe eines Dünnschichtverdampfers oder eines Dünnfilmverdampfers. Derartige Destillationsverfahren sind im Kunststoff-Handbuch Band 7, "Polyurethane", G.W. Becker (Herausgeber), Hanser-Verlag, München, 3. Auflage 1993, Seite 425, beschrieben.

Geeignete Diisocyanate (c4) umfassen Hexamethylendiisocyanat, Isophorondiisocyanat, 4,4'-Diisocyanatodicyclohexylmethan, Methylendiphenylisocyanat, Toluol-2,4-diisocyanat und Toluol-2,6-diisocyanat, die kommerziell unter dem Handelsnamen Desmodur von der Firma Covestro AG verfügbar sind, und meta-Tetramethylxylylendiisocyanat von der Firma Allnex Germany GmbH.

Beispiele für hydroxyfunktionelle Methacrylate (c5) sind 2-Hydroxyethylmethacrylat, 2-Hydroxypropylmethacrylat und Glyceroldimethacrylat, die kommerziell unter dem Handelsnamen Visiomer von Evonik Performance Materials GmbH erhältlich sind, und Pentaerythritoltrimethacrylat oder Abmischungen aus den genannten Rohstoffen.

Geeignete Katalysatoren, welche die Reaktion von Isocyanatgruppen mit Hydroxygruppen beschleunigen, umfassen metallorganische Verbindungen von Zinn, Eisen, Titan oder Bismut, wie Dibutyl- oder Dioctylzinndiacetat, Dibutyl- oder Dioctylzinndilaurat, und Tributylzinnacetat. Weitere Katalysatoren sind Zinn(II)salze und Bismut(III)salze von Carbonsäuren, wie Zinn(II)-acetat, Zinn(II)-2-ethylhexanoat und Bismut(III)-neodecanoat.

Um Hart- und Weichsegmente in die Verbindung (c2) einzubauen, können die genannten Diisocyanate (c4) zunächst auch mit Polyolen beispielsweise auf Polyether-, Polycarbonat- und/oder Polybutadien-Basis umgesetzt werden, solange dabei ein Verhältnis von NCO : OH von mindestens 2:1 eingehalten wird. Die so kettenverlängerten difunktionellen Isocyanate können abschließend mit hydroxyfunktionellen Methacrylaten (c5) umgesetzt werden.

Um bei der Bestrahlung eine höhere Lichtfixierfestigkeit zu erzielen, kann die Verwendung von höherfunktionellen Hydroxymethacrylaten (c5) zur Synthese der Hybridverbindung (c1) sinnvoll sein. Bevorzugt sind dabei Methacrylatfunktionalitäten von mindestens 2. Höherfunktionelle Hydroxymethacrylate (c5) sind aus der Veresterung von mindestens trifunktionellen Alkoholen mit Methacrylsäure erhältlich.

Gemäß einer weiteren bevorzugten Ausführungsform können auch kommerziell erhältliche Isocyanatomethacrylate (c2) für die Umsetzung mit hydroxyfunktionellen epoxidhaltigen Verbindungen (c3) eingesetzt werden.

Derartige Isocyanatomethacrylate (c2) wie 2-Isocyanatoethylmethacrylat oder 2-(2-Isocyanatoethyloxy)ethylmethacrylat sind unter den Bezeichnungen Karenz MOI oder Karenz MOI-EG von Showa Denko Europe GmbH erhältlich.

Diese kommerziell erhältlichen, monofunktionellen Isocyanatomethacrylate (c2) bieten den Vorteil, dass die strahlungshärtbare Hybridverbindung (c1) durch Umsetzung mit hydroxyfunktionellen Epoxiden (c3) in einer Stufe erhalten werden kann.

Bevorzugte Beispiele für hydroxyfunktionelle epoxidhaltige Verbindungen (c3) sind oligomere oder polymere Glycidylether von Bisphenolen wie z.B. Bisphenol-A basierte Epoxidharze (z.B. DowDupont D.E.R. 671) oder Bisphenol-F basierte Epoxidharze (z.B. Kukdo KD-9004).

Bevorzugt werden hydroxyfunktionelle epoxidhaltige Verbindungen (c3) eingesetzt, die eine Hydroxyfunktionalität von zwei oder mehr aufweisen. Bei der vollständigen Umsetzung mit den beschriebenen Isocyanatomethacrlyaten (c2) enthalten die erfindungsgemäßen Hybridverbindungen (c1) bevorzugt mehr als eine strahlungshärtbare Methacrylatgruppe.

In einer weiteren Ausführungsform kann die Verbindung (c1), die neben mindestens einer Methacrylatgruppe ebenfalls mindestens eine Epoxidgruppe aufweist, durch Umsetzung von methacrylatfunktionalisierten Silanen (c6) mit hydroxyfunktionellen Epoxiden (c3) in einer Kondensationsreaktion erhalten werden. Bevorzugt erfolgt die Umsetzung in einem Alkoxysilan : OH-Verhältnis von mindestens 2 : 1, in Anwesenheit eines geeigneten Katalysators wie einer Lewis-Säure auf Basis von Zinn, Titan oder Zink, insbesondere Dibutylzinndilaurat, Dioctylzinndilaurat oder Zink(II)-acetylacetonat. Alternativ können auch Amin-Katalysatoren wie aliphatische tertiäre Amine oder ungesättigte bicyclische Amine, insbesondere Triethylamin oder Diazabicycloundecen genutzt werden. Wahlweise kann der Überschuss an nicht umgesetztem Methacrylalkoxysilan (c6) durch Destillation abgetrennt werden.

Kommerziell verfügbare Verbindungen (c6) umfassen 3-Methacryloxypropyltrimethoxysilan, (Methacryloxymethyl)methyldimethoxysilan, Methacryloxymethyltrimethoxysilan und 3-Methacryloxypropyltriacetoxysilan, die von der Firma Wacker unter den Handelsbezeichnungen GF 31, XL 32, XL 33 und GF 39 erhältlich sind.

Für die Herstellung der Komponente (c1) kann es von Vorteil sein, diese in inerten Lösungsmitteln wie beispielsweise Tetrahydrofuran, Aceton oder Ethylacetat durchzuführen. Diese können nach der Synthese destillativ wieder entfernt werden. Als reaktive Verdünner können monofunktionelle Epoxidverbindungen aus der Gruppe der Komponente (a) ausgewählt werden.

Der Einsatz von strählungshärtbaren Hybridverbindungen mit Acrylatgruppen in Komponente (c) ist nicht bevorzugt, da diese nach dem Mischen der Komponenten durch Addition an den Aminhärter (b) abreagieren können.

Im Falle von Methacrylatgruppen verläuft die Additionsreaktion des Aminhärters an die Doppelbindung wesentlich langsamer, so dass die gewünschte Epoxid-Aminpolyaddition dominiert. Dies ermöglicht den Aufbau eines Netzwerkes welches sowohl in den bestrahlten als auch unbestrahlten Zonen nach dem Aushärten vergleichbare mechanische Eigenschaften aufweist.

Je nach der angestrebten Verwendung der Massen kann ein Anteil an Verbindungen mit strahlungshärtbaren Acrylatgruppen in den erfindungsgemäßen Massen jedoch toleriert werden, solange die gewünschte Verarbeitungszeit eingehalten werden kann und die mechanischen Eigenschaften der gehärteten Masse in den bestrahlten und unbestrahlten Bereichen nicht in einem für die jeweilige Anwendung unerwünschtem Maß voneinander abweichen.

Der Anteil der Hybridverbindung (c1) in der erfindungsgemäßen Masse ist so gewählt, dass der Stoffmengenanteil an strahlungshärtbaren Methacrylatgruppen der Hybridverbindungen 50 bis 100 % beträgt, bevorzugt 70 bis 100 %, jeweils bezogen auf das strahlungshärtbare Äquivalentgewicht (SEW) der Masse.

Um eine höhere Lichtfixierfestigkeit bei kurzen Bestrahlungszeiten zu erreichen, ist es ferner möglich, in den erfindungsgemäßen Massen zusätzlich bis zu maximal 50%, bezogen auf das strahlungshärtbare Äquivalentgewicht (SEW) der Masse, einer weiteren strahlungshärtbaren Verbindung (c7) einzusetzen. Die weitere strahlungshärtbare Verbindung (c7) ist bevorzugt eine di- oder höherfunktionelle (meth)acrylathaltige Verbindung, weiter bevorzugt ein mindestens difunktionelles Methacrylat. Besonders bevorzugt liegt die mindestens di- oder höherfunktionelle (meth) acrylathaltige Verbindung (c7) in einem Anteil von maximal 30% vor, bezogen auf das strahlungshärtbare Äquivalentgewicht (SEW) der Masse. Anteile von mehr als 50% der weiteren strahlungshärtbaren Verbindung können die mechanischen Eigenschaften der ausgehärteten Masse in Schattenzonen im Vergleich zu bestrahlten Bereichen stark verändern und sind damit nicht im Sinne der Erfindung.

Auch mit Bezug auf die weitere strahlungshärtbare Verbindung ist die Verwendung von strahlungshärtbaren Verbindungen (c7) mit Acrylatgruppen zwar möglich, aber nicht bevorzugt.

Eine Kombination mehrerer strahlungshärtbarer Verbindungen (c7) ist ebenfalls im Sinne der Erfindung, solange ein Anteil von 50 %, bezogen auf das strahlungshärtbare Äquivalentgewicht (SEW) der Masse, nicht überschritten wird.

Beispiele für kommerziell erhältliche, mindestens difunktionelle Methacrylate (c7) umfassen 1,4-Butandioldimethacrylat (Sartomer SR214), Bisphenol-A Glycidylmethacrylat (bisGMA, Esstech Inc.) Diurethandimethacrylat (VISIOMER HEMATMDI, Evonik Industries) oder Trimethylolpropantrimethacrylat (Sartomer SR350D). Ein geeignetes Acrylat ist beispielsweise Trimethylolpropantriacrylat (Sigma Aldrich).

In den erfindungsgemäßen Massen liegt die Komponente (c) in einem Anteil von mindestens 10 Gew.-% vor, bevorzugt in einem Anteil von mindestens 20 Gew.-%, und besonders bevorzugt von mindestens 30 Gew.-%. Bevorzugt beträgt der maximale Anteil der Komponente (c) bis zu 80 Gewichtsprozent.

Die Epoxidgruppen der strahlungshärtbaren Verbindungen (c) sind für die Berechnung des EEW zu berücksichtigen.

Sofern die strahlungshärtbare Verbindung (c1) zwei oder mehr Epoxidgruppen pro Molekül aufweist, kann in einer weiteren Ausführungsform auf die difunktionelle Epoxidverbindung der Komponente (a) verzichtet werden. Bevorzugt enthält die Masse jedoch sowohl eine mindestens difunktionelle Epoxidverbindung der Komponente (a) als auch eine Hybridverbindung (c1) mit einer oder mehreren Epoxidgruppen im Molekül.

Komponente (d): Photoinitiator

Neben der strahlungshärtbaren Hybridverbindung (c1) enthalten die Massen noch einen Photoinitiator (d) zur Aktivierung der radikalischen Polymerisation. Als radikalische Photoinitiatoren können die üblichen, im Handel erhältlichen Verbindungen eingesetzt werden, wie beispielsweise $\alpha$-Hydroxyketone (Irgacure 184, Irgacure 2959), Ben-zophenon, $\alpha,\alpha'$-Diethoxyacetophenon, 4,4-Diethylaminobenzophenon, 2,2-Dimethoxy-2-phenylacetophenon (Irgacure 651), 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid (Irgacure TPO), Bisacylphosphinoxide (Irgacure 819) Iodonium-Salze oder Metallocene (Irgacure 784) wobei die genannten Photoinitiatoren allein oder in Kombination von zwei oder mehreren der genannten Verbindungen verwendet werden können.

Als UV-Photoinitiatoren können beispielsweise die IRGACURE™-Typen von BASF SE eingesetzt werden, so beispielsweise die Typen IRGACURE 500, IRGACURE 1179, IRGACURE 745, IRGACURE 369 (2-Benzyl-2-dimethylamino-1-(4-morpholinophenyl)-butanon-1), IRGACURE 907 (2-Methyl-4'-(methylthio)-2-morpholinopropiophenone, IRGACURE 1300 (a-Aminoketon), IRGACURE 819DW, IRGACURE 2022, IRGACURE 2100, IRGACURE 250, IRGACURE TPO-L. Ferner sind die DAROCURTM-Typen von BASF SE verwendbar, so beispielsweise die Typen DAROCUR MBF, DAROCUR 1173 und DAROCUR 4265.

Der in den erfindungsgemäßen Massen als Komponente (d) eingesetzte Photoinitiator ist vorzugsweise durch aktinische Strahlung einer Wellenlänge von 200 bis 600 nm aktivierbar, besonders bevorzugt von 320 bis 480 nm. Bei Bedarf kann der Photoinitiator mit einem geeigneten Sensibilisierungsmittel kombiniert werden.

Die Verwendung mehrerer Photoinitiatoren (d) ist ebenfalls im Sinne der Erfindung.

Besonders bevorzugt sind flüssige Photoinitiatoren wie z.B. Irgacure TPO-L.

Der Photoinitiator (d) liegt in den erfindungsgemäßen Massen bevorzugt in einem Anteil von 0,01 bis 5 Gew.-% vor, bezogen auf das Gesamtgewicht der reaktiven Komponenten (a) bis (e).

Komponente (e): Beschleuniger

Als Beschleuniger in den erfindungsgemäßen Massen können beispielsweise Amine, Alkohole und/oder Metallsalze eingesetzt werden.

Als Amine sind insbesondere tertiäre Amine wie Tris-(dimethylaminomethyl)-phenol geeignet, das von der Firma Evonik unter dem Handelsnamen Ancamine K54 erhältlich ist. Entsprechende Alkohole, die als Beschleuniger wirken, umfassen insbesondere Phenole wie p-tert-Butylphenol (Songnox PTBP), Cardanol (Cardolite NC-700) oder Nonylphenol und deren Derivate sowie Benzylalkohol. Ebenso können Metallsalze wie $Ca(NO_3)_2$ oder $Ca(OTf)_2$, sowie Komplexe von Metallsalzen zur Beschleunigung der Epoxidhärtung eingesetzt werden.

Der Beschleuniger (e) liegt in den erfindungsgemäßen Massen bevorzugt in einem Anteil von 0,01 bis 5 Gew.-% vor, bezogen auf das Gesamtgewicht der reaktiven Komponenten (a) bis (e).

Der Beschleuniger (e) wird bevorzugt in die Härterkomponente (B) eingebracht.

Die Verwendung mehrerer Beschleuniger ist ebenfalls im Sinne der Erfindung.

Komponente (f): Weitere Additive

Neben den Komponenten (a) bis (e) können die erfindungsgemäßen Massen weitere Additive (f) enthalten. Bevorzugte Additive (f) sind Zähigkeitsmodifikatoren wie Core-Shell-Partikel (Kaneka KaneAce™-Serie, Dow Paraloid™ EXL-Serie, Wacker Genioperl®) oder Block-Copolymere, reaktive Elastifizierungsmittel (beispielsweise geblockte Isocyanat-Präpolymere gemäß US 5,278,257 A), Farbstoffe, Pigmente, Fluoreszenzmittel, Thixotropiermittel, Verdicker, Stabilisatoren, Antioxidantien, Weichmacher, Füllstoffe, Flammschutzmittel, Korrosionsinhibitoren, inerte Verdünnungsmittel, Katalysatoren, Verlaufs- und Benetzungsadditive und Haftvermittler, sowie Kombinationen davon.

Als Füllstoffe können anorganische und organische Füllstoffe verwendet werden. Diese können in der erfindungsgemäßen Masse in einem Anteil von 0 bis 90 Gew.-% enthalten sein, hier bezogen auf das Gesamtgewicht der Masse aus den Komponenten (a) bis (f). Alle übrigen der genannten Additive liegen in den erfindungsgemäßen Massen bevorzugt in einem Anteil von jeweils 0 bis 20 Gew.-% vor, ebenfalls bezogen auf das Gesamtgewicht der Masse.

Als Stabilisatoren sowohl für die flüssigen Formulierungen, als auch die ausgehärteten Massen können beispielsweise gehinderte Phenole (z.B. 2,6-Di-t-butyl-4-methylphenol), substituierte Hydrochinon-Monoalkylether (MeHQ; Hydroxychinonmonomethylether), HALS ("hindered amine light stablizers"), Phosphite oder aromatische Thioether eingesetzt werden.

Bevorzugt werden die genannten Stabilisatoren bereits im Rahmen der Herstellung der Hybridverbindung (c1) eingesetzt.

Formulierung der erfindungsgemäßen Massen:

Die erfindungsgemäße Masse wird bevorzugt als Zweikomponentenmasse mit einer Harzkomponente (A) und einer physisch von der Harzkomponente (A) getrennten Härterkomponente (B) bereitgestellt. Die Harzkomponente (A) umfasst bevorzugt die mindestens difunktionelle Epoxidverbindung der Komponente (a), die Hybridverbindung (c1) und den Photoinitiator (d). Die Härterkomponente (B) umfasst bevorzugt den Härter auf Stickstoffbasis der Komponente (b) und den Beschleuniger (e).

Gemäß einer bevorzugten Ausführungsform besteht die erfindungsgemäße Masse aus den folgenden Komponenten:

a) wahlweise einer mindestens difunktionellen epoxidhaltigen Verbindung sowie wahlweise einer monofunktionellen Epoxidverbindung als Reaktivverdünner;

b) einem mindestens difunktionellen Härter auf Stickstoffbasis, der zur Polyaddition an eine Epoxidverbindung geeignet ist;

c) einer strahlungshärtbaren Hybridverbindung (c1), die sowohl eine oder mehrere Methacrylatgruppen, als auch eine oder mehrere Epoxidgruppen trägt, sowie wahlweise einer weiteren strahlungshärtbaren Verbindung, wobei der Stoffmengenanteil an strahlungshärtbaren Methacrylatgruppen der Hybridverbindung mindestens 50 % beträgt, bezogen auf das strahlungshärtbare Äquivalentgewicht (SEW) der Masse;

d) einem radikalischen Photoinitiator;

e) wahlweise einem Beschleuniger und

f) wahlweise weiteren Additiven.

Gemäß einer weiteren bevorzugten Ausführungsform besteht die erfindungsgemäße Masse aus den folgenden Komponenten, jeweils bezogen auf das Gesamtgewicht der Komponenten a) bis e):

a) 10 bis 65 Gewichtsprozent einer mindestens difunktionellen epoxidhaltigen Verbindung, sowie 0 bis 15 Gewichtsprozent einer monofunktionellen Epoxidverbindung als Reaktivverdünner;

b) 5 bis 90 Gewichtsprozent eines mindestens difunktionellen Härters auf Stickstoffbasis, der zur Polyaddition an eine Epoxidverbindung geeignet ist;

c) 10 bis 80 Gewichtsprozent einer strahlungshärtbaren Verbindung, wobei die strahlungshärtbare Verbindung mindestens eine Hybridverbindung (c1) umfasst, die sowohl eine oder mehrere Methacrylatgruppen als auch eine oder mehrere Epoxidgruppen trägt, sowie wahlweise eine weitere strahlungshärtbare Verbindung (c7), wobei der Stoffmengenanteil an strahlungshärtbaren Gruppen der Hybridverbindung 50 bis 100 % beträgt, bevorzugt 70 bis 100 %, bezogen auf das strahlungshärtbare Äquivalentgewicht (SEW) der Masse;

d) 0,01 bis 5 Gewichtsprozent eines radikalischen Photoinitiators;

e) 0,01 bis 5 Gewichtsprozent eines Beschleuniger für die Epoxidhärtung; und

f) wahlweise weiteren Additiven.

Eine beispielhafte Formulierung der erfindungsgemäßen Zweikomponentenmasse umfasst bevorzugt die folgenden Komponenten, wobei sich die angegebenen Gewichtsprozente hier jeweils auf das Gesamtgewicht der Harzkomponente (A) beziehungsweise der Härterkomponente (B) beziehen:

Harzkomponente (A):

(a) 20 bis 50 Gew.- % eines Bisphenol-A/F-Diglycidylethers;

(c) 15 bis 50 Gew.- % einer strahlungshärtenden Hybridverbindung (c1), die sowohl eine oder mehrere Methacrylatgruppen als auch eine oder mehrere Epoxidgruppen aufweist und bevorzugt aus der Umsetzung einer Hydroxidgruppen enthaltenden difunktionellen Epoxidverbindung (c3) mit einem isocyanatfunktionalisierten Methacrylat (c2) erhältlich ist;

(d) 0,1 bis 5 Gew.- % eines radikalischen Photoinitiators;

(f) 0 bis 60 Gew. % eines oder mehrerer Additive, bevorzugt aus der Gruppe der Thixotropiermittel, Core-Shell-Kautschuke, anorganischen Füllstoffe, Stabilisatoren und Haftvermittler sowie Kombinationen davon.

Härterkomponente (B):

(b) 10 bis 100 Gew.-% eines Härters auf Basis von Aminen, insbesondere aus der Gruppe der (Poly)etheramine und/oder cycloaliphatischen Amine;

(f) 0 bis 90 Gew. % Additive; umfassend Thixotropiermittel, Core Shell Kautschuk, anorganische Füllstoffe sowie Haftvermittler.

Das Mischungsverhältnis der Harzkomponente (A) zur Härterkomponente (B) ergibt sich aus den Äquivalentgewichten EEW (epoxy equivalent weight) [g/mol Epoxid] der Harzkomponente (A) und AHEW (active hydrogen equivalent weight) [g/mol akt-H] der Härterkomponente (B).

Bevorzugt wird das Mischungsverhältnis der Komponenten (A) und (B) zueinander so gewählt, dass ein Äquivalentgewichtsverhältnis EEW/AHEW von 0,8 bis 1,2 und besonders bevorzugt von 0,95 bis 1,05 erhalten wird.

Gemäß einer bevorzugten Ausführungsform besteht die Formulierung aus den genannten Komponenten.

Verwendung der erfindungsgemäßen Massen

Durch die Möglichkeit der Lichtfixierung und die Option der Härtung bei Raumtemperatur eignen sich die erfindungsgemäßen Massen für schnelle energieeffiziente industrielle Prozesse mit kurzen Taktzeiten, bei denen gleichzeitig eine möglichst niedrige thermische Belastung der beteiligten Bauteile gefordert wird.

Gegenstand der Erfindung ist daher auch die Verwendung der erfindungsgemäßen Massen als Klebstoff, Vergussmasse, Abformmasse oder Dichtstoff für das Verkleben, Vergießen, Abdichten oder Beschichten von Substraten. Die im Folgenden genannten Einsatzbereiche sind dabei beispielhaft und nicht abschließend.

Die Massen können für eine schnelle Fixierung von Haltern wie sie beispielsweise im Flugzeuginnenraum zur Montage von Kabeln oder Anbauteilen verwendet werden. Ebenfalls vorteilhaft sind die erfindungsgemäßen Massen bei Vergussanwendungen, wo durch die Bestrahlung eine Fixierung der Geometrie erreicht wird und somit eine Einsparung von Montagevorrichtungen erreicht werden kann. Eine weitere Verwendungsmöglichkeit besteht bei der Verklebung von Magneten im Rahmen der Herstellung von E-Motoren. Durch die große Masse und Wärmekapazität der Bauteile ist in diesem Bereich die Raumtemperaturhärtung besonders von Vorteil, um Energie einzusparen.

Ferner eignen sich die erfindungsgemäßen Massen zur Präzisionsfertigung von Bauteilen, insbesondere optoelektronischen Komponenten.

Lichtfixierung

Die erfindungsgemäßen Massen lassen sich bevorzugt durch Bestrahlen mit aktinischer Strahlung in einem Wellenlängenbereich von 200 bis 600 nm, bevorzugt von 320 bis 480 nm in einen dimensionsstabilen Zustand überführen. Besonders bevorzugt ist die Verwendung von energiesparenden LED-Lampen, die Licht mit einer Wellenlänge im Bereich von 365 nm bis 405 nm abgeben.

Die Methacrylatgruppen der Hybridverbindung (c1) und wahlweise der weiteren strahlungshärtbaren Verbindung (c7) vernetzen unter diesen Bedingungen durch radikalische Polymerisation. Die so fixierten Massen sind ausreichend formstabil und lassen sich schnell einer Verarbeitung in weiteren Prozessschritten zuführen, bevor die Aushärtung abgeschlossen ist.

Die Eindringtiefe der aktinischen Strahlung und somit auch die Dicke der lichtfixierten Schicht kann über die Bestrahlungsdosis, die Menge und Art der eingesetzten Füllstoffe und Additive und die verwendete Wellenlänge gesteuert werden.

Härtung der erfindungsgemäßen Massen

Bei Raumtemperatur erreichen die erfindungsgemäßen Massen ohne zusätzliche Bestrahlung in weniger als 10 h, bevorzugt in weniger als 6 h, besonders bevorzugt in weniger als 4 h eine ausreichende Handfestigkeit ("green strength"), welche für eine Weiterverarbeitung gefertigter Bauteile ausreicht.

Die Endaushärtung erfolgt bei Raumtemperatur innerhalb von 7 d, bevorzugt innerhalb von 5 und besonders bevorzugt innerhalb von 3 Tagen. Die Härtungsreaktion kann durch Wärme beschleunigt werden.

Bei einer Temperatur von 60 °C lassen sich die Massen innerhalb von 4 h, bevorzugt innerhalb von 2 h vollständig aushärten. Bei einer Temperatur von 80 °C kann die Härtung typischerweise innerhalb von 2 h, bevorzugt innerhalb von 1 h abgeschlossen werden.

Temperaturabgestufte Härtungsprofile sind ebenfalls im Sinne der Erfindung.

Der Wärmeeintrag kann bspw. in Konvektionsöfen, durch Thermoden, IR Strahler, Laser oder Induktion erfolgen.

Füge- oder Beschichtungsverfahren unter Verwendung der erfindungsgemäßen Massen

Die erfindungsgemäßen Massen bieten den Vorteil, dass in Fügeprozessen Bauteile oder Formkörper durch Bestrahlung mit aktinischer Strahlung in ihrer Position fixiert werden können.

Ein entsprechendes Verfahren zum Verkleben, Vergießen, Abformen oder Beschichten von Substraten unter Verwendung der erfindungsgemäßen Massen umfasst bevorzugt folgende Schritte:

a) Mischen der Harzkomponente (A) mit der Härterkomponente (B)

b) Dosieren der Masse auf ein erstes Substrat;

c) Wahlweise Zuführen eines zweiten Substrats unter Bildung eines Substratverbundes, wobei das zweite Substrat mit der Masse in Kontakt gebracht wird und wahlweise eines der beiden Substrate relativ zum anderen ausgerichtet wird;

d) Bestrahlen der Masse mit aktinischer Strahlung, wobei die bestrahlte Masse eine Fixierfestigkeit erreicht, welche für eine Weiterverarbeitung des ersten Substrats oder des Substratverbundes ausreichend ist; und

e) Wahlweises Einhalten einer Wartezeit bei Raumtemperatur, bis die Masse ausgehärtet ist, oder Erwärmen der bestrahlten Masse auf dem Substrat oder in dem Substratverbund zur Verkürzung der Wartezeit oder bis zur Aushärtung.

Mit Hilfe des erfindungsgemäßen Verfahrens lässt sich eine hohe Positionstreue der gefügten Bauteile bis zur endgültigen Aushärtung realisieren. Auf konventionelle Fixierhilfen, die in der Praxis bei miniaturisierten Bauteilen nicht einsetzbar sind oder einen unzumutbaren Mehraufwand bedeuten, kann so weitgehend verzichtet werden.

Falls es die Anwendung erfordert, kann wahlweise das erste oder zweite Substrat nach dem Fügen relativ zum jeweils anderen ausgerichtet werden, bevor eine Fixierung durch Bestrahlung der Masse erfolgt. Eine derartige Ausrichtung ist bevorzugt in der Fertigung von optoelektronischen Bauteilen wie Kameramodulen (Active Alignment) gefordert.

Verwendete Messverfahren und Definitionen

Bestrahlung

Zur Bestrahlung wurden die erfindungsgemäßen Massen mit einer LED-Lampe DELOLUX 20 / 365 der Firma DELO Industrie Klebstoffe GmbH & Co. KGaA bei einer Wellenlänge von 365 nm mit einer Intensität von $200 \pm 20\,\mathrm{mW/cm^2}$ für eine Dauer von 60 s bestrahlt.

Bestimmung der Verarbeitungszeit

Die Verarbeitungszeit wurde gemäß DIN EN 14022:2010 (Verfahren 1) bestimmt. Hierfür wurde ein Rheometer Physica MCR302 der Firma Anton Paar mit einem standardisiertem Messstempel PP20 bei einem Messspalt von 1000 $\mu$m und einer Temperatur von +23 °C verwendet. Als Verarbeitungszeit wird die Zeitspanne ab Mischung der Komponenten definiert, innerhalb der eine Verdoppelung der scheinbaren Viskosität |n*| bei oszillierender Messweise mit einer Amplitude $\gamma$ von 1% und einer Frequenz f von $1\,\mathrm{s^{-1}}$ auftritt. Die Mischung des Klebstoffs (3 g in Summe) erfolgte manuell mit einem Spatel auf einem PE-beschichtetem Anmischblock. Die erfindungsgemäßen Massen gelten so lange als uneingeschränkt verarbeitbar, bis sich die Viskosität verdoppelt hat. Insbesondere lassen sich die erfindungsgemäßen Massen innerhalb der Verarbeitungszeit uneingeschränkt dosieren und durch Bestrahlung fixieren.

Aushärtung

"Vernetzung" oder "Aushärtung" werden definiert als Polymerisations- oder Additionsreaktion über den Gelpunkt hinaus. Der Gelpunkt ist der Punkt, an dem das Speichermodul G' gleich dem Verlustmodul G" wird. Die Aushärtung der Prüfkörper erfolgte bei Raumtemperatur für 7 Tage.

Raumtemperatur

Raumtemperatur ist definiert als 23 $\pm$ 2 °C.

Beurteilung der Lichtfixierung

Zur Beurteilung der Lichtfixierung (fest vs. flüssig) werden die Massen einer optischen Beurteilung unterzogen. Optional erfolgt eine haptische Prüfung unter Zuhilfenahme eines Kunststoffspatels.

Fließverhalten (Ablauftest)

Als Prüfkörper dient eine nicht saugfähige, beschichtete Pappe mit einer Dicke von 1,5 mm und Kantenlängen von 100 mm x 174 mm.

Auf dem Prüfkörper wird eine Startlinie parallel zu einer der kurzen Kanten (Abstand ca. 15 bis 30 mm) markiert. Oberhalb der Linie werden Tropfen der zu prüfenden Massen von etwa 0,1 g aufgetragen, während die Pappe auf einer waagerechten Fläche aufgelegt ist. Der Prüfkörper wird 1 min in dieser Position belassen. Anschließend wird der Klebstofftropfen optional entsprechend den unter dem Punkt "Bestrahlung" angegebenen Parametern bestrahlt. Im Folgenden wird der Prüfkörper senkrecht gestellt und verweilt für die Prüfzeit (24 h) in dieser Position, wobei der Klebstoff je nach Fließfähigkeit eine mehr oder weniger lange Strecke nach unten zurücklegt. Der Test wurde bei Raumtemperatur durchgeführt.

Nach Ablauf der Prüfzeit (24 h) wird der Probekörper zurück in die waagerechte Stellung gebracht und der Ablaufweg des Klebstoffes bestimmt. Hierbei wird die zurückgelegte Strecke von der Startlinie bis zum untersten Ende der jeweiligen Fließfront gemessen. Fließt die Masse bis zum Ende des Prüfkörpers, so wird der Fließweg bis zum Ende der Pappe gemessen und mit einem "größer als"-Zeichen ("> x mm") versehen.

Bestimmung der Zugeigenschaften

Die Bestimmung der Zugeigenschaften E-Modul, Zugfestigkeit und Reißdehnung erfolgte in Anlehnung an DIN EN ISO 527-2:2012-06. Es wurden Probeköper des Typs 5A verwendet. Die Prüfgeschwindigkeit zur Ermittlung des E-Moduls betrug 1 mm/min und zur Ermittlung der Zugfestigkeit und Reißdehnung 10 mm/min. Die Prüfung erfolgte bei Raumtemperatur an einer Universalprüfmaschine AllroundLine 20kN der Firma Zwick Roell. Die Aushärtezeit betrug 7 Tage bei Raumtemperatur im Dunkeln. Optional erfolgte direkt nach dem Einbringen der gemischten Masse in die Aushärteform eine beidseitige Bestrahlung für 60 s mit aktinischer Strahlung.

Bestimmung der Glasübergangstemperatur ($T_G$)

Die Bestimmung der Glasübergangstemperatur erfolgte mittels Differential Scanning Calorimetry (DSC) nach DIN EN ISO 11357-1:2017-2. Es wurden Al-Tiegel mit einem Volumen von 40 $\mu$l mit gelochtem Deckel verwendet, in welchen die Produkte optional entsprechend den unter dem Punkt "Bestrahlung" angegebenen Parametern bestrahlt und 7 Tage bei Raumtemperatur ausgehärtet wurden. Die Messung erfolgte mit einer DSC2 der Firma Mettler Toledo in 2 Heizläufen von 0 °C bis 220°C mit einer Heizrate von 10 K/min im ersten Heizlauf und 20 K/min im zweiten Heizlauf. Zur Auswertung der $T_G$ wurde das Halbstufenhöhenverfahren nach ISO 11357-2:2013 im zweiten Heizlauf verwendet.

Herstellung der härtbaren Massen

In der nachfolgenden Liste sind alle zur Herstellung der härtbaren Massen verwendeten Verbindungen und deren Abkürzungen angegeben:

Komponente (a): Epoxidverbindung

(a1): Epikote™ Resin 169 (Mischung aus Bisphenol A und Bisphenol F Glycidylethern; erhältlich von der Firma Hexion);

(a2): Epikote™ Resin 166 (Mischung aus Bisphenol A und Bisphenol F Glycidylethern; erhältlich von der Firma Hexion);

(a3): D.E.N 438 (Epoxid Novolakharz; erhältlich von der Firma DowDupont);

(a4): Epikote Resin 828LVEL (chlorarmes Bisphenol A Harz; erhältlich von der Firma Hexion);

Komponente (b): mindestens difunktioneller Härter

(b1): Aradur 140 (Polyamidoimidazol; erhältlich von der Firma Huntsman);

(b2): Baxxodur EC-130 (Polyetheramin; erhältlich von der Firma BASF SE);

(b3): N-Aminoethylpiperazin (erhältlich von der Firma Sigma-Aldrich);

(b4): m-Xylylendiamin (erhältlich von der Firma Sigma-Aldrich);

(b5): Cardolite Lite 2002 (Phenalkamin; erhältlich von der Firma Cardolite); und

(b6): Epoxid-Amin-Addukt aus der Umsetzung von (a4) und (b4) gemäß Herstellungsbeispiel 5.

Komponente (c): strahlungshärtbare Verbindung

(c1-1): Hybridverbindung gemäß Herstellungsbeispiel 1;

(c1-2): Hybridverbindung gemäß Herstellungsbeispiel 3;

(c2-1): Karenz MOI (2-Isocyanatoethylmethacrylat; erhältlich von der Firma Showa Denko Europe GmbH);

(c2-2): Isocyanatomethacrylat gemäß Herstellungsbeispiel 2;

(c3-1): D.E.R. 671 Epoxy Resin (festes hydroxyfunktionelles Epoxidharz auf Bisphenol A Basis; erhältlich von der Firma DowDupont);

(c5-1): 2-Hydroxyethylmethacrylat (erhältlich von der Firma Sigma-Aldrich)

(c7-1): TMPTMA Trimethylolpropantrimethacrylat (erhältlich von der Firma Sigma-Aldrich);

(c7-2): TMPTA Trimethylolpropantriacrylat (erhältlich von der Firma Sigma-Aldrich);

(c8): Hybridverbindung auf Acrylat-Basis gemäß Herstellungsbeispiel 4; und

(c9): Karenz AOI (2-Isocyanatoethylacrylat; erhältlich von der Firma Showa Denko Europe GmbH).

Komponente (d): Photoinitiator

(d1): Irgacure TPO-L (erhältlich von der Firma Lambson)

Komponente (f): Weitere Additive

(f1): Dynasilan Glymo von der Firma Evonik (Haftvermittler);

(f2): Hydrochinonmonomethylether; erhältlich von Firma Sigma-Aldrich (Stabilisator);

(f3): 2,6-Di-tert-butyl-4-methylphenol; erhältlich von Firma Sigma-Aldrich (Stabilisator); und

(f4): Dibutylzinndilaurat; erhältlich von Firma Sigma-Aldrich (Katalysator).

Herstellung der strahlungshärtbaren Verbindung (c1)

Herstellungsbeispiel 1: Hybridverbindung (c1-1)

742,50 g Epikote Resin 169 (a1) wurden in einen Reaktionsbehälter eingegeben, der mit einem geeigneten Rührer ausgerüstet war. Die Temperatur wurde danach auf 90 °C erhöht. Unter konstantem Rühren wurden 495,00 g D.E.R. 671 Epoxy Resin (c3-1) zugesetzt und für 4 Stunden bei dieser Temperatur homogenisiert. Dann wurde die Temperatur auf 50°C reduziert und es wurden 0,43 g Hydrochinonmonomethylether (f2), 0,43 g 2,6-Di-tert-butyl-4-methylphenol (f3) und 0,56 g Dibutylzinndilaurat (f4) zugesetzt. Unter konstantem Rühren wurden 154,40 g Karenz MOI (c2-1) zugesetzt. Dann wurde die Temperatur auf 60 °C erhöht. Die Reaktion wurde 3 Stunden lang bei dieser Temperatur gehalten. Das Verschwinden der NCO-Absorption im Infrarot-Absorptionsspektrum wurde ermittelt und dann wurde die Reaktion angehalten. Als Produkt wurde die Hybridverbindung (c1-1), 47%ig gelöst in 53% Epoxidverbindung (a1), erhalten.

Herstellungsbeispiel 2: Isocyanatomethacrylat (c2-2)

333,44 g (1,50 mol) Isophorondiisocyanat (IPDI) (c4-1) wurden in einen Reaktionsbehälter eingegeben, der mit einem geeigneten Rührer ausgerüstet war. 1,05 g Hydrochinonmonomethylether (f2) und 1,05 g 2,6-Di-tert-butyl-4-methylphenol (f3) wurden zugesetzt und unter trockener Druckluft gelöst. Dann wurde 0,50 g Dibutylzinndilaurat (f4) zugesetzt und die Temperatur auf 15 °C reduziert. Unter konstantem Rühren wurden bei dieser Temperatur 191,38 g (1,47 mol) 2-Hydroxyethylmethacrylat (c5-1) zugesetzt. Dann wurde die Temperatur langsam auf 50°C erhöht. Die Reaktion wurde 3 Stunden lang bei dieser Temperatur gerührt, bis ein NCO-Gehalt von 11,60 % erreicht war. Man erhielt ein praktisch farbloses, klares Isocyanatomethacrylat (c2-2).

Herstellungsbeispiel 3: Hybridverbindung (c1-2)

877,50 g Epikote Resin 169 (a1) wurden in einen Reaktionsbehälter eingegeben, der mit einem geeigneten Rührer ausgerüstet war. Die Temperatur wurde danach auf 90 °C erhöht. Unter konstantem Rühren wurden 247,50 g D.E.R. 671 Epoxy Resin (c3-1) zugesetzt und für 4 Stunden bei dieser Temperatur homogenisiert. Dann wurde die Temperatur auf 50 °C reduziert und es wurden 0,13 g Dibutylzinndilaurat (f4) zugesetzt. Unter konstantem Rühren wurden 174,74 g Isocyanatomethacrylat (c2-2) zugesetzt. Dann wurde die Temperatur langsam auf 70 °C erhöht. Die Reaktion wurde 6 Stunden lang bei dieser Temperatur gehalten. Das Verschwinden der NCO-Absorption im Infrarot-Absorptionsspektrum wurde ermittelt und dann wurde die Reaktion angehalten. Als Produkt wurde die Hybridverbindung (c1-2), 32% ig gelöst in 68% Epoxidverbindung (a1), erhalten.

Herstellungsbeispiel 4: Hybridverbindung auf Acrylat-Basis (c8)

742,50 g Epikote Resin 169 (a1) wurden in einen Reaktionsbehälter eingegeben, der mit einem geeigneten Rührer ausgerüstet war. Die Temperatur wurde danach auf 90 °C erhöht. Unter konstantem Rühren wurden 495,00 g D.E.R. 671 Epoxy Resin (c3-1) zugesetzt und für 4 Stunden bei dieser Temperatur homogenisiert. Dann wurde die Temperatur auf 50 °C reduziert und es wurden 0,40 g Hydrochinonmonomethylether (f2), 0,41 g 2,6-Di-tert-butyl-4-methylphenol (f3) und 0,55 g Dibutylzinndilaurat (f4) zugesetzt. Unter konstantem Rühren wurden 140,40 g Karenz AOI (c9) zugesetzt. Dann wurde die Temperatur auf 60 °C erhöht. Die Reaktion wurde 3 Stunden lang bei dieser Temperatur gehalten. Das Verschwinden der NCO-Absorption im Infrarot-Absorptionsspektrum wurde ermittelt und dann wurde die Reaktion angehalten. Als Produkt wurde die Hybridverbindung (c8) auf Acrylatbasis, 46%ig gelöst in 54% Epoxidverbindung (a1), erhalten.

Herstellungsbeispiel 5: Härter (b6)

In einer geeigneten Rührapparatur wurden 32 g Epikote Resin 828LVEL (a4) vorgelegt. Unter Rühren wurden bei Raumtemperatur 65 g m-Xylylendiamin (b4) im Verlauf von 30 Minuten zugetropft. Die Temperatur wurde auf 40 °C erhöht und bis zum Ende der exothermen Reaktion bei dieser Temperatur (4 Stunden) belassen. Man erhält als Reaktionsprodukt (b6) ein Epoxid-Aminaddukt aus (a4) und (b4) mit einem AHEW von 56 g/mol.

Formulierung der härtbaren Massen

Zur Formulierung der in den folgenden Beispielen verwendeten härtbaren Massen werden zunächst die Bestandteile der Harzkomponente (A) entsprechend Tabelle 1 vorgelegt. Dazu werden die angegebenen Mengen an den Komponenten (a), (c), (d) und (f) in einer geeigneten PP-Dose für die Verwendung in einem Speedmixer (Fa. Hauschild) solange vermischt, bis eine homogene Masse vorliegt. Komponenten die bei Raumtemperatur fest oder aufgrund hoher Viskosität schwer zu verarbeiten sind, können zusätzlich erwärmt werden. Anschließend erfolgt die Zugabe des Photoinitiators (d1) unter Umgebungslicht, welches außerhalb der Anregungswellenlängen des Photoinitiators (d1) oder etwaiger Sensibilisatoren liegt. Abschließend wird die Masse erneut gemischt und enthaltene Luft bei einem Druck von 10 hPa entfernt. Für höherviskose Massen kann die Herstellung in einem Planetenrührwerk vorteilhaft sein.

Zur Herstellung der Härterkomponente (B) werden alle Härterbestandteile (b) und wahlweise weitere Additive (f) in einer geeigneten PP-Dose für die Verwendung in einem Speedmixer (Fa. Hauschild) eingewogen und im Speedmixer bei einem Druck von 10 hPa gemischt, bis eine homogene Masse vorliegt.

Für die Herstellung der erfindungsgemäßen Beispiele und der Vergleichsbeispiele aus Tabelle 1 werden die Harzkomponente (A) und die Härterkomponente (B) entsprechend der angegebenen Massenanteile in eine geeignete PE-Dose eingewogen und im Speedmixer gemischt. Dies erfolgt unter Umgebungslicht, welches außerhalb der Anregungswellenlängen des Photoinitiators (d1) oder etwaiger Sensibilisatoren liegt.

Tabelle 1: Formulierung der Massen und deren Eigenschaften (n.b. = nicht bestimmt)

| Komponente | Erfindungsgemäße Beispiele wt[%] | | | | | | | | | | Vergleichsbeispiele wt[%] | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| (a2) | 31,4 | 31,5 | 44,6 | 20,6 | 34,9 | 32,7 | 31,4 | 26,7 | 24,1 | 44,3 | 62,7 | 31,2 | 60,1 | 27,3 |
| (a3) | | | | | | | | | 8,3 | | | | | |
| (c1-1) | 48,2 | 46,8 | 32 | 49,8 | 32,1 | 50,5 | 48,4 | 41,1 | 50,0 | 31,7 | 8,0 | | | |
| (c8) | | | | | | | | | | | | 48,1 | | **41,9** |
| (c7-1) | | 1,6 | 2,5 | | 2,5 | | | | | | 8,0 | | 8,0 | |
| (c7-2) | | | | | | | | | 2,1 | | | | | |
| (d1) | 0,8 | 0,8 | 0,8 | 0,8 | 0,8 | 0,8 | 0,8 | 0,7 | 0,8 | 0,8 | 0,8 | 0,8 | 0,8 | 0,8 |
| (f1) | | | | | | | | | 0,8 | | | | | |
| **Summe Komponente A** | **80,4** | **80,7** | **79,9** | **71,2** | **70,3** | **84** | **80,6** | **68,5** | **84** | **78,9** | **79,5** | **80,1** | **68,9** | **70** |
| (b1) | | | | 28,8 | 29,7 | | | | | | | | 31,1 | 30,0 |
| (b2) | 19,6 | 19,3 | 20,1 | | | 8 | 8,1 | | 8 | 21,1 | 20,5 | 19,9 | | |
| (b3) | | | | | | 1,6 | 1,6 | | 1,6 | | | | | |
| (b4) | | | | | | 6,4 | | | 6,4 | | | | | |
| (b5) | | | | | | | | 31,5 | | | | | | |
| (b6) | | | | | | | 9,7 | | | | | | | |
| **Summe Komponente B** | **19,6** | **19,3** | **20,1** | **28,8** | **29,7** | **16** | **19,4** | **31,5** | **16** | **21,1** | **20,5** | **19,9** | **31,1** | **30** |
| **SEW** | 2898 | 2098 | 2221 | 2805 | 2217 | 2766 | 2886 | 3399 | 2794 | 2255 | 1307 | 2965 | 1413 | 3403 |
| **Anteil Hybridverb. an SEW** | 100% | 70% | 51% | 100% | 51% | 100% | 100% | 100% | 100% | 51% | 7% | 100% | 0% | 100% |
| **Optische Beurteilung** | | | | | | | | | | | | | | |
| unbestrahlt | flüssig | flüssig | flüssig | flüssig | flüssig | flüssig | Flüssig | flüssig | flüssig | flüssig | Flüssig | flüssig | flüssig | flüssig |
| bestrahlt | Fest | fest | fest | fest | fest | fest | Fest | fest | fest | fest | Fest | flüssig | fest | fest |
| **Ablaufstrecke [mm]** | | | | | | | | | | | | | | |
| unbestrahlt | 38 | 28 | 49 | 11 | 16 | 33 | 26 | 22 | 29 | 16 | 52 | 28 | 37 | 12 |
| bestrahlt | 0 | 0 | 0 | 0 | 0 | 0 | 0 | 0 | 0 | 0 | 0 | 38 | 0 | 0 |
| **Verarbeitungszeit [min]** | 38 | n.b. | 40 | 112 | n.b. | n.b. | n.b. | n.b. | n.b. | 35 | 52 | 14 | n.b. | 31 |

(fortgesetzt)

| | | | | | | | | | | | | | | |
|---|---|---|---|---|---|---|---|---|---|---|---|---|---|---|
| **E-Modul [MPa]** | | | | | | | | | | | | | | |
| unbestrahlt | 3400 | 3300 | 3300 | 2700 | 2600 | 3700 | 3600 | 2600 | 3700 | 3100 | 2900 | 3300 | 1000 | 2700 |
| bestrahlt | 3600 | 3600 | 3400 | 2900 | 3000 | 3800 | 3900 | 2900 | 3800 | 3200 | 3400 | 3300 | 2600 | 2700 |
| **Reißdehnung [%]** | | | | | | | | | | | | | | |
| unbestrahlt | 4,5 | 3,9 | 5,3 | 3,7 | 3,7 | 2,0 | 2,2 | 2,4 | 2,5 | 4,0 | 7,1 | 4,8 | 23,3 | 3,5 |
| bestrahlt | 3,7 | 3,6 | 3,6 | 2,4 | 4,1 | 1,9 | 2,3 | 2,7 | 2,7 | 4,2 | 3,4 | 4,4 | 3,4 | 4,2 |
| **Glasübergangstemperatur [°C]** | | | | | | | | | | | | | | |
| unbestrahlt | 51 | 61 | 59 | 82 | 73 | 88 | 85 | 72 | 71 | 65 | 66 | 66 | 61 | 91 |
| bestrahlt | 56 | 66 | 62 | 88 | 85 | 95 | 93 | 78 | 75 | 65 | 66 | 66 | 80 | 89 |

Die erfindungsgemäßen Beispiele aus Tabelle 1 enthalten als strahlungshärtbare Komponente (c) die Hybridverbindung (c1), die sowohl Epoxidgruppen als auch Methacrylatgruppen trägt. Die Methacrylatgruppen der Hybridverbindung liegen, bezogen auf das strahlungshärtbare Äquivalentgewicht der Masse (SEW), in den erfindungsgemäßen Beispielen zu mindestens 50 % vor.

Alle erfindungsgemäßen Beispiele 1 bis 10 zeichnen sich dadurch aus, dass diese durch Bestrahlung fixiert werden können. Nach Bestrahlung sind die Massen haptisch fest und zeigen im Ablauftest kein Verfließen. Das nicht erfindungsgemäße Vergleichsbeispiel 12 auf Basis einer acrylathaltigen strahlungshärtbaren Hybridverbindung (c8) bleibt nach der Bestrahlung dagegen flüssig und verfließt im Ablauftest. Gleichzeitig ist durch die Verwendung der Hybridverbindung (c8) mit Acrylatgruppen die Verarbeitungszeit von Vergleichsbeispiel 12 im direkten Vergleich zu einer sonst analogen, aber auf der Verbindung (c1-1) basierenden Formulierung (erfindungsgemäßes Beispiel 1) um mehr als die Hälfte reduziert.

Das erfindungsgemäße Beispiel 10 enthält neben der Hybridverbindung (c1) zusätzlich Trimethylolpropantriacrylat (c7-2) als weitere strahlungshärtbare Verbindung. Die weitere strahlungshärtbare Verbindung (c7-2) liegt in einem Anteil von weniger als 50% vor, bezogen auf das strahlungshärtbare Äquivalentgewicht der Masse. Die Masse zeigt noch keine signifikanten Nachteile in Bezug auf die mechanischen Eigenschaften in den bestrahlten und unbestrahlten Bereichen und die Verarbeitungszeit. Im Vergleich zum erfindungsgemäßen Beispiel 3, in welchem das analoge Methacrylat (c7-1) als weitere strahlungshärtbare Verbindung eingesetzt wird, ist die Verarbeitungszeit nur um 5 Minuten verkürzt.

Die Masse von Vergleichsbeispiel 14 enthält in Anlehnung an den Stand der Technik gemäß EP 0 245 559 B1 einen Härter, der gegenüber den Acrylatgruppen der Hybridverbindung (c8) eine langsame Additionsreaktion zeigt. Das Vergleichsbeispiel 14 lässt sich zwar durch Bestrahlung fixieren, gleichzeitig ist aber die Verarbeitungszeit im Vergleich zum erfindungsgemäßen Beispiel 4 auf Basis der methacrylathaltigen Hybridverbindung (c1-1) bereits um mehr als 2/3 reduziert.

Die erfindungsgemäßen Beispiele 4 und 5 enthalten einen Härter (b1) auf Basis eines Polyamidoimidazols. Das Beispiel 5 enthält zur Verbesserung der Lichtfixierfestigkeit zusätzlich Trimethylolpropantrimethyacrlyat (c7-1) als weitere strahlungshärtbare Verbindung. Vergleichsbeispiel 13 enthält dagegen nur Trimethylolpropantrimethyacrlyat (c7-1) als weitere strahlungshärtbare Verbindung, jedoch nicht die Hybridverbindung (c1). Dies führt zu signifikanten Unterschieden in den mechanischen Eigenschaften der gehärteten Masse in den bestrahlten und unbestrahlten Bereichen. So unterscheiden sich die Reißdehnung absolut um nahezu 20% und der E-Modul um den Faktor 2,6. Die Glasübergangstemperatur ist in der unbestrahlten Masse um 19 °C niedriger.

Die erfindungsgemäßen Beispiele 1 bis 3 enthalten als Härter ein Polyetherdiamin (b2). Das erfindungsgemäße Beispiel 1 enthält als strahlungshärtbare Komponente (c) ausschließlich die Hybridverbindung (c1-1). Die erfindungsgemäßen Beispiele 2 und 3 enthalten zusätzlich TMPTA (c7-1) bis zu einem Anteil von 49 %, bezogen auf den Gesamtanteil der strahlungshärtbaren Gruppen (SEW) der Komponente (c). Die mechanischen Eigenschaften der ausgehärteten Massen weichen in den bestrahlten und unbestrahlten Zonen bis zu dieser Konzentration nur geringfügig voneinander ab.

In der Masse von Vergleichsbeispiel 11 entfallen nur 7 % der strahlungshärtbaren Methacrylatgruppen auf die Hybridverbindung (c1-1), bezogen auf das SEW der Masse. Die Masse ist zwar uneingeschränkt lichtfixierbar, zeigt aber nach der Aushärtung in den mechanischen Eigenschaften, insbesondere hinsichtlich der Reißdehnung, eine relative Abweichung zwischen der bestrahlten und unbestrahlten Masse von mehr als 50%.

Die erfindungsgemäßen Beispiele 6, 7, 9 enthalten Härtermischungen auf Basis von Polyetheraminen, cycloaliphatischen Aminen und aromatischen Benzylaminen. Im erfindungsgemäßen Beispiel 7 wurde ein Härter (b6) eingesetzt, der aus der teilweisen Umsetzung eines Bisphenol A Epoxidharzes (Epikote Resin 828LVEL, (a4)) und MXDA (b4) erhalten wurde (Herstellungsbeispiel 5).

Das erfindungsgemäße Beispiel 8 enthält als Härter eine kommerziell erhältliche Mischung aus MXDA (b4) und Phenalkaminen (b5).

Die erfindungsgemäßen Massen zeichnen sich durch eine hohe Formulierungsbreite in Bezug auf den Härter aus, ohne dass dadurch die mechanischen Eigenschaften der ausgehärteten Masse, wie Glasübergangstemperatur, E-Modul und Reißdehnung, zwischen den bestrahlten und unbestrahlten Bereichen der Masse signifikant voneinander abweichen. Gleichzeitig weisen die erfindungsgemäßen Beispiele variable Verarbeitungszeiten auf, ohne dass die beschriebenen Eigenschaften negativ beeinflusst werden.

**Patentansprüche**

1. Härtbare, zwei- oder mehrkomponentige Masse, umfassend

    (a) wahlweise eine mindestens difunktionelle epoxidhaltige Verbindung;

(b) einen mindestens difunktionellen Härter auf Stickstoffbasis, der für die Epoxidhärtung geeignet ist, wobei der Härter bei Raumtemperatur, 23 ± 2 °C, in flüssiger Form vorliegt;

(c) 10 bis 80 Gewichtsprozent einer strahlungshärtbaren Verbindung, die wenigstens eine Hybridverbindung (c1) umfasst, bezogen auf das Gesamtgewicht der Komponenten a) bis d), wobei die Hybridverbindung (c1) sowohl eine oder mehrere strahlungshärtbare Methacrylatgruppen als auch eine oder mehrere Epoxidgruppen aufweist, wobei die Hybridverbindung (c1) jeweils in Bezug auf die Epoxidgruppen und/oder die strahlungshärtbaren Methacrylatgruppen di- oder höherfunktionell ist, und

wobei der Stoffmengenanteil der strahlungshärtbaren Methacrylatgruppen der Hybridverbindung 50 bis 100 % beträgt, bezogen auf das strahlungshärtbare Äquivalentgewicht (SEW) der Masse, wobei das strahlungshärtbare Äquivalentgewicht (SEW) der Masse wie in der Beschreibung angegeben definiert ist;

(d) einen radikalischen Photoinitiator;

(e) wahlweise einen Beschleuniger für die Epoxidhärtung; und

(f) wahlweise weitere Additive.

2.  Masse nach Anspruch 1, **dadurch gekennzeichnet, dass** die Masse durch Bestrahlung mit aktinischer Strahlung fixierbar ist.

3.  Masse nach Anspruch 1 oder 2, **dadurch gekennzeichnet, dass** die Hybridverbindung (c1) durch Umsetzung eines methacrylathaltigen Isocyanates oder eines methacrylathaltigen Silans mit einer hydroxyfunktionellen Epoxidverbindung erhältlich ist.

4.  Masse nach einem der vorhergehenden Ansprüche, **dadurch gekennzeichnet, dass** die Masse zusätzlich zur strahlungshärtbaren Hybridverbindung (c1) eine weitere strahlungshärtbare Verbindung enthält, bevorzugt eine weitere strahlungshärtbare Methacrylatverbindung, wobei der Stoffmengenanteil der strahlungshärtbaren Methacrylatgruppen der Hybridverbindung mindestens 50 % beträgt, bezogen auf das strahlungshärtbare Äquivalentgewicht (SEW) der Masse.

5.  Masse nach einem der vorhergehenden Ansprüche, **dadurch gekennzeichnet, dass** die Masse aus den folgenden Komponenten besteht:

(a) wahlweise einer mindestens difunktionellen epoxidhaltigen Verbindung sowie wahlweise einer monofunktionellen Epoxidverbindung als Reaktivverdünner;

(b) einem mindestens difunktionellen Härter auf Stickstoffbasis, der zur Polyaddition an eine Epoxidverbindung geeignet ist, wobei der Härter bei Raumtemperatur, 23 ± 2 °C, in flüssiger Form vorliegt;

(c) 10 bis 80 Gewichtsprozent einer strahlungshärtbaren Hybridverbindung (c1), bezogen auf das Gesamtgewicht der Komponenten a) bis d), wobei die Hybridverbindung (c1) sowohl eine oder mehrere Methacrylatgruppen als auch eine oder mehrere Epoxidgruppen trägt, bevorzugt zwei oder mehr Epoxidgruppen, wobei die Hybridverbindung (c1) jeweils in Bezug auf die Epoxidgruppen und/oder die strahlungshärtbaren Methacrylatgruppen di- oder höherfunktionell ist, sowie wahlweise eine weitere strahlungshärtbare Verbindung (c7), wobei der Stoffmengenanteil der strahlungshärtbaren Methacrylatgruppen der Hybridverbindung mindestens 50 % beträgt, bezogen auf das strahlungshärtbare Äquivalentgewicht (SEW) der Masse, wobei das strahlungshärtbare Äquivalentgewicht (SEW) der Masse wie in der Beschreibung angegeben definiert ist;

(d) einem radikalischen Photoinitiator;

(e) wahlweise einem Beschleuniger; und

(f) wahlweise weiteren Additiven.

6.  Masse nach einem der vorhergehenden Ansprüche, **dadurch gekennzeichnet, dass** die Masse aus den folgenden Komponenten besteht, jeweils bezogen auf das Gesamtgewicht der Komponenten a) bis e):

(a) 10 bis 65 Gewichtsprozent einer mindestens difunktionellen epoxidhaltigen Verbindung, sowie 0 bis 15 Gewichtsprozent einer monofunktionellen Epoxidverbindung als Reaktivverdünner;

(b) 5 bis 90 Gewichtsprozent eines mindestens difunktionellen Härters auf Stickstoffbasis, der zur Polyaddition an eine Epoxidverbindung geeignet ist, wobei der Härter bei Raumtemperatur, 23 ± 2 °C, in flüssiger Form vorliegt;

(c) 10 bis 80 Gewichtsprozent einer strahlungshärtbaren Verbindung, wobei die strahlungshärtbare Verbindung mindestens eine Hybridverbindung (c1) umfasst, die sowohl eine oder mehrere Methacrylatgruppen als auch eine oder mehrere Epoxidgruppen trägt, bevorzugt zwei oder mehr Epoxidgruppen, wobei die Hybridverbindung (c1) jeweils in Bezug auf die Epoxidgruppen und/oder die strahlungshärtbaren Methacrylatgruppen di- oder höherfunktionell ist, sowie wahlweise eine weitere strahlungshärtbaren Verbindung (c7), wobei der Stoffmengenanteil der strahlungshärtbaren Methacrylatgruppen der Hybridverbindung 50 bis 100 % beträgt, bevorzugt 70 bis 100 %, bezogen auf das strahlungshärtbare Äquivalentgewicht (SEW) der Masse;

(d) 0,01 bis 5 Gewichtsprozent eines radikalischen Photoinitiators;

(e) 0,01 bis 5 Gewichtsprozent eines Beschleuniger für die Epoxidhärtung; und

(f) wahlweise weiteren Additiven.

7. Masse nach einem der vorhergehenden Ansprüche, **dadurch gekennzeichnet, dass** die Masse eine zweikomponentige Masse mit einer Harzkomponente (A) und einer Härterkomponente (B) ist, wobei die Harzkomponente (A) die mindestens difunktionelle Epoxidverbindung der Komponente (a), die Hybridverbindung (c1) und den Photoinitiator (d) umfasst, und die Härterkomponente (B) den Härter auf Stickstoffbasis der Komponente (b) und wahlweise den Beschleuniger (e) umfasst.

8. Masse nach Anspruch 7, **dadurch gekennzeichnet, dass**

die Harzkomponente (A) Folgendes umfasst: 20 bis 50 Gew.- % eines Bisphenol-A/F-Diglycidylethers der Komponente (a); 15 bis 50 Gew.- % der strahlungshärtbaren Hybridverbindung der Komponente (c1), 0,1 bis 5 Gew.- % eines radikalischen Photoinitiators der Komponente (d) und 0 bis 60 Gew. % weitere Additive der Komponente (f) aus der Gruppe der Thixotropiermittel, Core-Shell-Kautschuke, anorganischen Füllstoffe, Stabilisatoren, Haftvermittler und Kombinationen davon, jeweils bezogen auf die Gesamtmasse der Harzkomponente (A);

und dass die Härterkomponente (B) 10 bis 100 Gew.-% eines Härters auf Basis von Aminen der Komponente (b) umfasst, insbesondere aus der Gruppe der (Poly)etheramine und cycloaliphatischen Amine sowie Kombinationen davon, wobei der Härter bei Raumtemperatur, 23 ± 2 °C, in flüssiger Form vorliegt, und 0 bis 90 Gew.-% weitere Additive der Komponente (f) aus der Gruppe der Thixotropiermittel, Core-Shell-Kautschuke, anorganischen Füllstoffe, Haftvermittler und Kombinationen davon, jeweils bezogen auf das Gesamtgewicht der Härterkomponente (B).

9. Masse nach Anspruch 7, **dadurch gekennzeichnet, dass** die Masse die Harzkomponente (A) mit einem Epoxidäquivalentgewicht EEW und die Härterkomponente (B) mit einem aktiven Amin-H-Äquivalentgewicht AHEW umfasst, wobei ein Mischungsverhältnis der Harzkomponente (A) zur Härterkomponente (B) in einem Bereich von 0,8 bis 1,2 liegt, bevorzugt von in einem Bereich von 0,95 bis 1,05, bezogen auf das Verhältnis von EEW zu AHEW.

10. Verfahren zum Verkleben, Vergießen, Abformen oder Beschichten von Substraten unter Verwendung der Masse nach Anspruch 7, welches die folgenden Schritte umfasst:

a) Mischen der Harzkomponente (A) mit der Härterkomponente (B)

b) Dosieren der Masse auf ein erstes Substrat;

c) Wahlweise Zuführen eines zweiten Substrats unter Bildung eines Substratverbundes, wobei das zweite Substrat mit der Masse in Kontakt gebracht wird und wahlweise eines der beiden Substrate relativ zum anderen ausgerichtet wird;

d) Bestrahlen der Masse mit aktinischer Strahlung, wobei die bestrahlte Masse eine Fixierfestigkeit erreicht, welche für eine Weiterverarbeitung des ersten Substrats oder des Substratverbundes ausreichend ist; und

e) Wahlweises Einhalten einer Wartezeit bei Raumtemperatur, 23 ± 2 °C, bis die Masse ausgehärtet ist, oder Erwärmen der bestrahlten Masse auf dem Substrat oder in dem Substratverbund zur Verkürzung der Wartezeit oder bis zur Aushärtung.

11. Verwendung der Masse nach einem der Ansprüche 1 bis 9 zur Fertigung von Elektromotoren sowie für die Herstellung optoelektronischer Aufbauten.

**Claims**

1. A curable two- or multi-part composition, comprising

(a) optionally an at least bifunctional epoxy-containing compound;

(b) an at least bifunctional nitrogen-based curing agent suitable for epoxy curing, the curing agent being present in liquid form at room temperature, 23 ± 2 °C;

(c) 10 to 80 weight percent of a radiation-curable compound which comprises at least one hybrid compound (c1), based on the total weight of components (a) to (d), the hybrid compound (c1) having both one or more radiation-curable methacrylate groups and one or more epoxy groups, the hybrid compound (c1) being bifunctional or of a higher functionality each with regard to the epoxy groups and/or the radiation-curable methacrylate groups, and wherein the amount-of-substance fraction of the radiation-curable methacrylate groups of the hybrid compound is 50 to 100 %, based on the radiation-curable equivalent weight (SEW) of the composition, the radiation-curable equivalent weight (SEW) of the composition being defined as indicated in the description;

(d) a radical photoinitiator;

(e) optionally an accelerator for epoxy curing; and

(f) optionally further additives.

2. The composition according to claim 1, **characterized in that** the composition can be fixed by irradiation with actinic radiation.

3. The composition according to claim 1 or 2, **characterized in that** the hybrid compound (c1) can be obtained by reaction of a methacrylate-containing isocyanate or a methacrylate-containing silane with a hydroxy-functional epoxy compound.

4. The composition according to any of the preceding claims, **characterized in that** the composition, in addition to the radiation-curable hybrid compound (c1), contains a further radiation-curable compound, preferably a further radiation-curable methacrylate compound, wherein the amount-of-substance fraction of the radiation-curable methacrylate groups of the hybrid compound is at least 50 %, based on the radiation-curable equivalent weight (SEW) of the composition.

5. The composition according to any of the preceding claims, **characterized in that** the composition consists of the following components:

(a) optionally an at least bifunctional epoxy-containing compound and optionally a monofunctional epoxy compound as a reactive diluent;

(b) an at least bifunctional nitrogen-based curing agent suitable for polyaddition to an epoxy compound, the curing agent being present in liquid form at room temperature, 23 ± 2 °C;

(c) 10 to 80 weight percent of a radiation-curable hybrid compound (c1), based on the total weight of components (a) to (d), the hybrid compound (c1) carrying both one or more methacrylate groups and one or more epoxy groups, preferably two or more epoxy groups, the hybrid compound (c1) being bifunctional or of a higher functionality each with regard to the epoxy groups and/or the radiation-curable methacrylate groups, and optionally a further radiation-curable compound (c7), wherein the amount-of-substance fraction of the radiation-curable methacrylate groups of the hybrid compound is at least 50 %, based on the radiation-curable equivalent weight (SEW) of the composition, the radiation-curable equivalent weight (SEW) of the composition being defined as indicated in the description;

(d) a radical photoinitiator;

(e) optionally an accelerator; and

(f) optionally further additives.

6. The composition according to any of the preceding claims, **characterized in that** the composition consists of the following components, each based on the total weight of components (a) to (e):

(a) 10 to 65 weight percent of an at least bifunctional epoxy-containing compound and 0 to 15 weight percent of a monofunctional epoxy compound as a reactive diluent;

(b) 5 to 90 weight percent of an at least bifunctional nitrogen-based curing agent suitable for polyaddition to an epoxy compound, the curing agent being present in liquid form at room temperature, 23 ± 2 °C;

(c) 10 to 80 weight percent of a radiation-curable compound, wherein the radiation-curable compound comprises at least one hybrid compound (c1) carrying both one or more methacrylate groups and one or more epoxy groups, preferably two or more epoxy groups, the hybrid compound (c1) being bifunctional or of a higher functionality each with regard to the epoxy groups and/or the radiation-curable methacrylate groups, and optionally a further radiation-curable compound (c7), wherein the amount-of-substance fraction of the radiation-curable methacrylate groups of the hybrid compound is 50 to 100 %, preferably 70 to 100 %, based on the radiation-curable equivalent weight (SEW) of the composition;

(d) 0.01 to 5 weight percent of a radical photoinitiator;

(e) 0.01 to 5 weight percent of an accelerator for epoxy curing; and
(f) optionally further additives.

7. The composition according to any of the preceding claims, **characterized in that** the composition is a two-part composition comprising a resin component (A) and a curing agent component (B), wherein the resin component (A) comprises the at least bifunctional epoxy compound of component (a), the hybrid compound (c1) and the photoinitiator (d), and the curing agent component (B) comprises the nitrogen-based curing agent of component (b) and optionally the accelerator (e).

8. The composition according to claim 7, **characterized in that**

the resin component (A) comprises the following: 20 to 50 wt.% of a bisphenol A/F diglycidyl ether of component (a); 15 to 50 wt.% of the radiation-curable hybrid compound of component (c1), 0.1 to 5 wt.% of a radical photoinitiator of component (d), and 0 to 60 wt.% of further additives of component (f) from the group of thixotropic agents, core-shell rubbers, inorganic fillers, stabilizers, adhesion promoters and combinations thereof, each based on the total composition of the resin component (A);
and **in that** the curing agent component (B) comprises 10 to 100 wt.% of a curing agent based on amines of component (b), in particular from the group of (poly)ether amines and cycloaliphatic amines and combinations thereof, the curing agent being present in liquid form at room temperature, $23 \pm 2 °C$, and 0 to 90 wt.% of further additives of component (f) from the group of thixotropic agents, core-shell rubbers, inorganic fillers, adhesion promoters and combinations thereof, each based on the total weight of the curing agent component (B).

9. The composition according to claim 7, **characterized in that** the composition comprises the resin component (A) having an epoxy equivalent weight EEW and the curing agent component (B) having an active amine hydrogen equivalent weight AHEW, wherein a mixing ratio of the resin component (A) to the curing agent component (B) is in a range of 0.8 to 1.2, preferably in a range of 0.95 to 1.05, based on the EEW/AHEW ratio.

10. A method for bonding, casting, molding or coating of substrates using the composition according to claim 7, comprising the following steps:

(a) mixing the resin component (A) with the curing agent component (B);
(b) dosing the composition onto a first substrate;
(c) optionally supplying a second substrate to form a substrate composite, wherein the second substrate is brought into contact with the composition, and optionally one of the two substrates is aligned relative to the other;
(d) irradiating the composition with actinic radiation, wherein the irradiated composition achieves a fixation strength that is sufficient for further processing of the first substrate or the substrate composite; and
(e) optionally maintaining a waiting time at room temperature, $23 \pm 2 °C$, until the composition is cured, or heating the irradiated composition on the substrate or in the substrate composite to reduce the waiting time or until curing.

11. A use of the composition according to any of claims 1 to 9 for the fabrication of electric motors and for the manufacture of optoelectronic structures.

**Revendications**

1. Matière durcissable à deux ou plusieurs composants, comprenant

(a) facultativement un composé contenant de l'époxyde au moins difonctionnel ;
(b) un durcisseur à base d'azote au moins difonctionnel, adapté au durcissement d'époxyde, ledit durcisseur étant sous forme liquide à température ambiante, $23 \pm 2 °C$ ;
(c) 10 à 80 pourcent en poids d'un composé durcissable par rayonnement comprenant au moins un composé hybride (c1), par rapport au poids total des composants a) à d), le composé hybride (c1) comportant à la fois un ou plusieurs groupes méthacrylate durcissables par rayonnement et un ou plusieurs groupes époxyde, le composé hybride (c1) étant respectivement difonctionnel ou à fonctionnalité supérieure par rapport aux groupes époxyde et/ou aux groupes méthacrylate durcissables par rayonnement, et
la fraction molaire des groupes méthacrylate durcissables par rayonnement du composé hybride étant comprise entre 50 et 100 %, par rapport au poids équivalent durcissable par rayonnement (SEW) de la matière, le poids équivalent durcissable par rayonnement (SEW) de la matière étant défini comme indiqué dans la description ;

(d) un photo-initiateur radicalaire ;
(e) facultativement un accélérateur pour le durcissement d'époxyde ; et
(f) facultativement d'autres additifs.

2. Matière selon la revendication 1, **caractérisée en ce que** la matière est apte à être fixée par irradiation avec un rayonnement actinique.

3. Matière selon la revendication 1 ou 2, **caractérisée en ce que** le composé hybride (c1) peut être obtenu par réaction d'un isocyanate contenant du méthacrylate ou d'un silane contenant du méthacrylate avec un composé époxyde à fonction hydroxy.

4. Matière selon l'une des revendications précédentes, **caractérisée en ce que** la matière contient, en plus du composé hybride durcissable par rayonnement (c1), un autre composé durcissable par rayonnement, de préférence un autre composé méthacrylate durcissable par rayonnement, la fraction molaire des groupes méthacrylate durcissables par rayonnement du composé hybride étant d'au moins 50 % par rapport au poids équivalent durcissable par rayonnement (SEW) de la matière.

5. Matière selon l'une des revendications précédentes, **caractérisée en ce que** la matière est constituée des composants suivants :

   (a) facultativement, un composé contenant de l'époxyde au moins difonctionnel et, facultativement, un composé époxyde monofonctionnel en tant que diluant réactif ;
   (b) un durcisseur à base d'azote au moins difonctionnel, adapté à la polyaddition à un composé époxyde, le durcisseur étant sous forme liquide à température ambiante, 23 $\pm$ 2 °C ;
   (c) 10 à 80 pourcent en poids d'un composé hybride durcissable par rayonnement (c1), par rapport au poids total des composants a) à d), le composé hybride (c1) comportant à la fois un ou plusieurs groupes méthacrylate et un ou plusieurs groupes époxyde, de préférence deux groupes époxyde ou plus, le composé hybride (c1) étant respectivement difonctionnel ou à fonctionnalité supérieure par rapport aux groupes époxyde et/ou aux groupes méthacrylate durcissables par rayonnement, et facultativement un autre composé durcissable par rayonnement (c7), la fraction molaire des groupes méthacrylate durcissables par rayonnement du composé hybride étant d'au moins 50 %, par rapport au poids équivalent durcissable par rayonnement (SEW) de la matière, le poids équivalent durcissable par rayonnement (SEW) de la matière étant défini comme indiqué dans la description ;
   (d) un photo-initiateur radicalaire ;
   (e) facultativement un accélérateur ; et
   (f) facultativement d'autres additifs.

6. Matière selon l'une des revendications précédentes, **caractérisée en ce que** la matière est constituée des composants suivants, chacun par rapport au poids total des composants a) à e) :

   (a) 10 à 65 pourcent en poids d'un composé contenant de l'époxyde au moins difonctionnel et 0 à 15 pourcent en poids d'un composé époxyde monofonctionnel en tant que diluant réactif ;
   (b) 5 à 90 pourcent en poids d'un durcisseur à base d'azote au moins difonctionnel, adapté à la polyaddition à un composé époxyde, le durcisseur étant sous forme liquide à température ambiante, 23 $\pm$ 2 °C ;
   (c) 10 à 80 pourcent en poids d'un composé durcissable par rayonnement, le composé durcissable par rayonnement comprenant au moins un composé hybride (c1) qui comporte à la fois un ou plusieurs groupes méthacrylate et un ou plusieurs groupes époxyde, de préférence deux groupes époxyde ou plus, le composé hybride (c1) étant respectivement difonctionnel ou à fonctionnalité supérieure par rapport aux groupes époxyde et/ou aux groupes méthacrylate durcissables par rayonnement, et facultativement un autre composé durcissable par rayonnement (c7), la fraction molaire des groupes méthacrylate durcissables par rayonnement du composé hybride étant comprise entre 50 et 100 %, de préférence entre 70 et 100 %, par rapport au poids équivalent durcissable par rayonnement (SEW) de la matière ;
   (d) 0,01 à 5 pourcent en poids d'un photo-initiateur radicalaire ;
   (e) 0,01 à 5 pourcent en poids d'un accélérateur pour le durcissement d'époxyde ; et
   (f) facultativement d'autres additifs.

7. Matière selon l'une des revendications précédentes, **caractérisée en ce que** la matière est une matière à deux composants comprenant un composant résineux (A) et un composant durcisseur (B), le composant résineux (A) comprenant le composé époxyde au moins difonctionnel du composant (a), le composé hybride (c1) et le photo-initiateur (d), et le composant durcisseur (B) comprenant le durcisseur à base d'azote du composant (b) et, facultativement, l'accélérateur (e).

8. Matière selon la revendication 7, **caractérisée en ce que**

le composant résineux (A) comprend : 20 à 50 % en poids d'un éther diglycidylique de bisphénol AF du composant (a), 15 à 50 % en poids du composé hybride durcissable par rayonnement du composant (c1), 0,1 à 5 % en poids d'un photo-initiateur radicalaire du composant (d), et 0 à 60 % en poids d'autres additifs du composant (f) du groupe des agents thixotropes, des caoutchoucs à structure cœur-coquille, des charges inorganiques, des stabilisants, des agents adhésifs et leurs combinaisons, chacun par rapport à la masse totale du composant résineux (A) ;
et **en ce que** le composant durcisseur (B) comprend 10 à 100 % en poids d'un durcisseur à base d'amines du composant (b), en particulier du groupe des (poly)étheramines et des amines cycloaliphatiques ainsi que de leurs combinaisons, le durcisseur étant sous forme liquide à température ambiante, 23 ± 2 °C, et 0 à 90 % en poids d'autres additifs du composant (f) du groupe des agents thixotropes, des caoutchoucs à structure cœur-coquille, des charges inorganiques, des agents adhésifs et leurs combinaisons, chacun par rapport au poids total du composant durcisseur (B).

9. Matière selon la revendication 7, **caractérisée en ce que** la matière comprend le composant résineux (A) avec un poids équivalent d'époxyde EEW et le composant durcisseur (B) avec un poids équivalent actif d'amine-H AHEW, un rapport de mélange du composant résineux (A) au composant durcisseur (B) étant compris dans une plage de 0,8 à 1,2, de préférence dans une plage de 0,95 à 1,05, par rapport au rapport du EEW au AHEW.

10. Procédé pour le collage, le scellage, le surmoulage ou le revêtement de substrats en utilisant la matière selon la revendication 7, comprenant les étapes suivantes :

a) mélanger le composant résineux (A) avec le composant durcisseur (B) ;
b) doser la matière sur un premier substrat ;
c) facultativement, amener un deuxième substrat pour former un composite de substrats, le deuxième substrat étant mis en contact avec la matière et, facultativement, l'un des deux substrats étant aligné par rapport à l'autre ;
d) irradier la matière avec un rayonnement actinique, la matière irradiée atteignant une résistance de fixation suffisante pour un traitement ultérieur du premier substrat ou du composite de substrats ; et
e) respecter, facultativement, un temps d'attente à température ambiante, 23 ± 2 °C, jusqu'à ce que la matière soit durcie, ou chauffer la matière irradiée sur le substrat ou dans le composite de substrats pour raccourcir le temps d'attente ou jusqu'à durcissement.

11. Utilisation de la matière selon l'une des revendications 1 à 9 pour la fabrication de moteurs électriques ainsi que pour la production de structures optoélectroniques.

**EP 3 844 199 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0245559 B1
- US 5057348 A
- WO 2018011116 A1
- US 5013631 A
- US 2010196618 A1
- DE 102016117183 A1
- US 2017233615 A1
- WO 2017044381 A1
- DE 3025227 A1
- US 5278257 A

**In der Beschreibung aufgeführte Nicht-Patentliteratur**

- Polyurethane. Kunststoff-Handbuch. Hanser-Verlag, 1993, vol. 7, 425